# EUROPEAN PATENT APPLICATION

(11) **EP 4 403 959 A1**
(43) Date of publication of application: **24.07.2024**
(21) Application number: 21959707.7
(22) Date of filing: 09.10.2021
(51) Int. Cl.: G01S 17/08

(54) **CONTROL METHOD AND APPARATUS, LIGHT DETECTION AND RANGING, AND TERMINAL DEVICE**

(71) Applicant: Huawei Technologies Co., Ltd., Shenzhen, Guangdong 518129 (CN)
(72) Inventor: ZHOU, Yilun, Shenzhen, Guangdong 518129 (CN); SHI, Xianling, Shenzhen, Guangdong 518129 (CN); CAO, Guoliang, Shenzhen, Guangdong 518129 (CN); HUANG, Zhizhen, Shenzhen, Guangdong 518129 (CN); YU, Anliang, Shenzhen, Guangdong 518129 (CN)
(74) Representative: Gill Jennings & Every LLP
(86) International application number: PCT/CN2021/122756
(87) International publication number: WO 2023/056615

(57) **Abstract**

A control method and apparatus, a LiDAR, and a terminal device are provided, to improve accuracy of pulse detection in the pulse control field. The method includes: controlling a transmit module to transmit a first pulse train and a second pulse train, where the first pulse train includes at least two first-type pulses and at least one second-type pulse, the second pulse train includes at least one first-type pulse and/or at least one second-type pulse, and a power of the first-type pulse is greater than a power of the second-type pulse. The high-power first-type pulse is used to detect a far-field target, and the low-power second-type pulse is used to detect a near-field target, so that accuracy of detecting the far-field target and the near-field target can be effectively improved, and point cloud quality of the LiDAR can be improved. In addition, the at least two first-type pulses are transmitted in the first pulse train, so that the far-field target can be detected by using the at least two first-type pulses, thereby further improving a detection effect of the far-field target and quality of a far-field point cloud.

## Description

### TECHNICAL FIELD

This application relates to the field of sensing technologies, and in particular, to the field of pulse control, and provides a control method and apparatus, a LiDAR, and a terminal device.

### BACKGROUND

A LiDAR (light detection and ranging, LiDAR) is an optical measurement device. The LiDAR works by transmitting a laser signal to an object and receiving a target echo signal reflected by the object, and then comparing the target echo signal with the laser signal to obtain related parameters such as a distance and a speed of the object. The LiDAR can accurately scan surrounding objects to form high-definition images, helping quickly identify and make decisions for the surrounding objects, and has been widely used in scenarios such as intelligent vehicles, smart transportation, three-dimensional city mapping, and atmospheric environment monitoring.

The LiDAR needs to effectively detect all targets in a field of view, including far-field and near-field targets. However, to detect a far-field target, the LiDAR usually configures a high-power transmit pulse, and the high power of the transmit pulse causes a strong stray signal in a system and a strong echo signal of a near-field target, which are prone to be beyond a receive range of the LiDAR, and are not conducive to improving detection accuracy. Therefore, currently, a control method further needs to be used to improve detection accuracy.

### SUMMARY

This application provides a control method and apparatus, a LiDAR, and a terminal device, to improve detection accuracy.

According to a first aspect, this application provides a control method, where the method is applicable to a control apparatus, and the method includes: The control apparatus controls a transmit module to transmit a first pulse train, where the first pulse train includes M₁ first-type pulses and M₂ second-type pulses; and controls the transmit module to transmit a second pulse train, where the second pulse train includes M₃ first-type pulses and/or M₄ second-type pulses, a power of the first-type pulse is greater than a power of the second-type pulse, M₁ is an integer greater than 1, and M₂, M₃, and M₄ are positive integers. The second pulse train and the first pulse train have different transmission time periods, or correspond to different transmit submodules, or correspond to different pixels in a detection field of view, or correspond to different detection fields of view, or correspond to different receive submodules. According to this design, the high-power first-type pulse in the first pulse train may be used to detect a far-field target, and the low-power second-type pulse may be used to detect a near-field target. The far-field target and the near-field target are detected by using respective matched pulses, so that accuracy of detecting the far-field target and the near-field target can be effectively improved, thereby improving point cloud quality of the LiDAR. In addition, the at least two first-type pulses are transmitted in the first pulse train. In one aspect, the far-field target can be detected by using the at least two high-power pulses, thereby further improving a detection effect for the far-field target, and further improving quality of a far-field point cloud. In another aspect, a quantity of first-type pulses is increased, and a quantity of time intervals included in the first pulse train can be correspondingly increased, so that more precise pulse position modulation is performed on the at least two first-type pulses based on the increased time intervals, thereby effectively improving anti-interference performance of the first pulse train. In still another aspect, a problem that a distance is blurred because the detected target exceeds a ranging range of one detection cycle can be further resolved through joint ranging of the plurality of first-type pulses. In addition, before the first pulse train and the second pulse train are transmitted, a test pulse does not need to be transmitted in advance, thereby improving transmit pulse utilization.

In a possible design, the first pulse train and the second pulse train may correspond to a same point cloud. In other words, the control apparatus may generate a point cloud based on at least the first pulse train and the second pulse train, so as to obtain more comprehensive information by using detection results of a plurality of pulse trains, thereby improving point cloud construction quality.

In a possible design, the first pulse train and the second pulse train may correspond to different point clouds. In other words, the control apparatus may separately generate, based on the first pulse train and the second pulse train, point clouds corresponding to the first pulse train and the second pulse train, to improve point cloud construction efficiency.

In a possible design, the first pulse train belongs to a first pulse train set and a second pulse train set, each pulse train in the first pulse train set includes a first-type pulse, and each pulse train in the second pulse train set includes a second-type pulse. A time interval of first-type pulses corresponding to any two pulse trains in the first pulse train set may be determined based on a far-field angular resolution, and a time interval of second-type pulses corresponding to any two pulse trains in the second pulse train set may be determined based on a near-field angular resolution.

For example, in the foregoing design, a time interval of first-type pulses corresponding to any two pulse trains may be a time interval between central transmission moments of all first-type pulses included in the any two pulse trains, and a time interval of second-type pulses corresponding to any two pulse trains may be a time interval between central transmission moments of all second-type pulses included in the any two pulse trains. For example, a first-type pulse is used as an example. It is assumed that a pulse train 1 and a pulse train 2 exist, the pulse train 1 includes a first-type pulse 1 and a first-type pulse 2, a transmission moment of the first-type pulse 1 is 5 ns, and a transmission moment of the first-type pulse 2 is 10 ns; and the pulse train 2 includes a first-type pulse 3, a first-type pulse 4, and a first-type pulse 5, a transmission moment of the first-type pulse 3 is 20 ns, a transmission moment of the first-type pulse 4 is 22 ns, and a transmission moment of the first-type pulse 5 is 26 ns. In this case, a central transmission moment of the two first-type pulses in the pulse train 1 is 7.5 ns, a central transmission moment of the three first-type pulses in the pulse train 2 is 23 ns, and it may be determined that a time interval of first-type pulses corresponding to the pulse train 1 and the pulse train 2 is 23 ns minus 7.5 ns, that is, 15.5 ns.

In another example, if pulses included in any two pulse trains in the first pulse train set and pulse arrangement manners are the same, the time interval of first-type pulses corresponding to any two pulse trains may alternatively be a time interval between transmission moments of the I₁^{th} first-type pulses in the any two pulse trains, and the time interval of second-type pulses corresponding to any two pulse trains may be a time interval between transmission moments of the I₂^{th} second-type pulses in the any two pulse trains. I₁ and I₂ are any positive integers less than or equal to a quantity of pulses included in any pulse train.

In the foregoing design, the far-field angular resolution refers to an angular resolution used for detecting a far-field target, and the near-field angular resolution refers to an angular resolution used for detecting a near-field target. The far-field angular resolution and the near-field angular resolution can be found in a product manual or an instruction manual of the LiDAR. In some cases, the two angular resolutions are limited by fixed values, and in other cases, the two angular resolutions are each limited by a supported range. When a supported range is used for limitation, ranges of the far-field angular resolution and the near-field angular resolution may overlap or may not overlap. If the resolutions are not described in the product manual or the instruction manual, optionally, the far-field angular resolution and the near-field angular resolution may be the same by default. In this design, the time interval between high-power first-type pulses is limited by using the far-field angular resolution for far-field target detection, so that the time interval between high-power first-type pulses meets both a remote measurement requirement and a far-field angular resolution requirement. The time interval between low-power second-type pulses is limited by using the near-field angular resolution for near-field target detection, so that the time interval between low-power second-type pulses meets both a dynamic optimization requirement and a near-field angular resolution requirement. This is helpful to make the transmit pulse train meet actual product requirements of the LiDAR.

In a possible design, the first pulse train belongs to a third pulse train set, and each pulse train in the third pulse train set includes a first-type pulse and a second-type pulse. When a ratio of the far-field angular resolution to the near-field angular resolution is an integer, a time interval offset of first-type pulses and second-type pulses corresponding to any two pulse trains in the third pulse train set is the same. When a ratio of the far-field angular resolution to the near-field angular resolution is not an integer, time interval offsets of first-type pulses and second-type pulses corresponding to at least two pulse trains in the third pulse train set are different. A time interval offset of first-type pulses and second-type pulses corresponding to two pulse trains is a difference between a time interval between a transmission moment of a first-type pulse and a transmission moment of a second-type pulse in one pulse train and a time interval between a transmission moment of a first-type pulse and a transmission moment of a second-type pulse in the other pulse train. In a possible example, a transmission moment of a first-type pulse in any pulse train may be a central transmission moment of all first-type pulses in the pulse train, and a transmission moment of a second-type pulse in any pulse train may be a central transmission moment of all second-type pulses in the pulse train. For a calculation manner of the central transmission moment, refer to the foregoing design. In another possible design, when pulses included in any two pulse trains and pulse arrangement manners are the same, a transmission moment of a first-type pulse in any pulse train may be a transmission moment of the 1^{st} first-type pulse in the pulse train, and a transmission moment of a second-type pulse in any pulse train may be a transmission moment of the 1^{st} second-type pulse in the pulse train; or a transmission moment of a first-type pulse in any pulse train may be a transmission moment of the last first-type pulse in the pulse train, and a transmission moment of a second-type pulse in any pulse train may be a transmission moment of the last second-type pulse in the pulse train; or the like. This is not specifically limited.

For example, in the foregoing design, "the same time interval offsets" is sameness in an ideal state. The sameness may further include sameness with a specific deviation due to an environment factor or another factor. In other words, as long as a value of the time interval offset falls within a range between a positive deviation and a negative deviation, it is considered that the time interval offsets are the same in this embodiment of this application. Correspondingly, "different time interval offsets" is a difference in an ideal state. The difference may tolerate a specific deviation caused by an environment factor or another factor. In other words, in this embodiment of this application, it is considered that the time interval offsets are different only when a value of the time interval offset is outside a range between a positive deviation and a negative deviation. In the foregoing design, the time interval offset between first-type pulses and second-type pulses is determined with reference to a ratio of the far-field angular resolution to the near-field angular resolution, so that a relative position of each pulse in a pulse train can be accurately configured based on a real requirement of the angular resolution, so that each pulse is transmitted based on a detection requirement in each detection cycle, thereby improving a detection effect.

It should be noted that, in the foregoing design, for any one of the first pulse train set, the second pulse train set, and the third pulse train set, two adjacent pulse trains in the pulse train set may be adjacent or may not be adjacent in a case in which positions are not disordered. For example, it is assumed that there are a pulse train 1, a pulse train 2, a pulse train 3, and a pulse train 4 that are sequentially arranged, the pulse train 1 includes a first-type pulse but does not include a second-type pulse, the pulse train 2 includes a second-type pulse but does not include a first-type pulse, and the pulse train 3 and the pulse train 4 each include a first-type pulse and a second-type pulse. In this case, the first pulse train set includes the pulse train 1, the pulse train 3, and the pulse train 4; the second pulse train set includes the pulse train 2, the pulse train 3, and the pulse train 4; and the third pulse train set includes the pulse train 3 and the pulse train 4. Based on this, the pulse train 1 and the pulse train 3 are adjacent pulse trains in the first pulse train set. However, in a case in which positions are not disordered, the pulse train 1 and the pulse train 3 are non-adjacent pulse trains because the pulse train 1 and the pulse train 3 are spaced by the pulse train 2. The pulse train 3 and the pulse train 4 are adjacent pulse trains in the first pulse train set, and are also adjacent pulse trains when the positions are not disordered.

In a possible design, for the first pulse train, the M₁ first-type pulses include M₁ first pulses with a same power, the M₂ second-type pulses include K types of second pulses, powers of the K types of second pulses are different, a sum of quantities of the K types of second pulses is M₂, and K is a positive integer. In this design, the M₁ first pulses with the same power may be used to detect a far-field target, to meet a remote measurement requirement of the LiDAR, and the K types of second pulses may be used to detect a near-field target, to increase an energy echo range of a near-field target that can be identified by the LiDAR, and meet a dynamic optimization requirement of the LiDAR. It can be learned that the first pulse train in this design can meet both the remote measurement requirement and the dynamic optimization requirement of the LiDAR.

In a possible design, the M₁ first-type pulses and the M₂ second-type pulses may be transmitted in a plurality of detection cycles, and a pulse train transmitted in each detection cycle includes one or more of a first pulse and/or the K types of second pulses. One transmission and one reception are referred to as one detection cycle. Duration of each detection cycle in one pulse train may be equal, for example, 500 ns; or at least two detection cycles may correspond to different lengths of duration, for example, duration of all the detection cycles is 500 ns, 1000 ns, 1500 ns, ..., and so on. Preferably, the duration of each detection cycle may be set based on a quantity, powers, and the like of pulses transmitted in the detection cycle. When a power of a transmitted pulse is smaller or a quantity of transmitted pulses is smaller, the duration of a detection cycle may also be set to be smaller. In this way, the duration of each detection cycle is controlled, so that a total time for transmitting a pulse train can be effectively reduced. In the foregoing design, the control apparatus may comprehensively determine a point cloud by using a plurality of detection results received in the plurality of detection cycles, thereby helping improve point cloud quality.

In a possible design, quantities and types of pulses included in pulse trains transmitted in any two detection cycles may be the same. In this way, complexity of controlling pulse transmission can be reduced. In another possible design, quantities and/or types of pulses included in pulse trains transmitted in any two detection cycles may be different. In this way, flexibility of transmitting a pulse in each detection cycle can be improved.

In a possible design, a pulse train transmitted within a detection cycle includes a first pulse and one or more of the K types of second pulses, and a time interval between the first pulse and an adjacent second pulse is not less than a time interval corresponding to a detection blind area of the first pulse, that is, the time interval between the first pulse and the adjacent second pulse is greater than or equal to duration from sending of the first pulse to receiving of an echo signal corresponding to the first pulse. Further, for example, the time interval may be set to a sum of duration from a moment when the first pulse is sent to a moment when the echo signal of the first pulse is received and random disturbance duration. The random disturbance duration refers to additional disturbance duration (which may be obtained through experiment verification) caused by an uncontrollable factor such as hardware, or disturbance duration that is set for a purpose (for example, adding disturbance to improve anti-interference performance). When the first pulse is corresponding to one echo signal, the duration that has elapsed is duration from sending the first pulse to receiving the echo signal. When the first pulse is corresponding to a plurality of echo signals, the duration that has elapsed is duration from sending the first pulse to receiving the 1^{st} echo signal in the plurality of echo signals. Generally, duration of an echo signal or the 1^{st} echo signal corresponding to a first-type pulse whose pulse width is within 10 ns is generally duration between 1 ns and 50 ns. In this design, after controlling the transmit module to send the first pulse, the control apparatus sends the second pulse after receiving the echo signal corresponding to the first pulse. This can effectively prevent the first pulse or the echo signal of the first pulse from affecting a detection process of the second pulse, and improve anti-interference between far-field detection and near-field detection.

In a possible design, a time interval between any two adjacent pulses other than the first pulse and the adjacent second pulse, for example, any two adjacent second pulses in a detection cycle, any two adjacent first pulses in a detection cycle, any two adjacent second pulses in a pulse train, or any two adjacent first pulses in a pulse train, a time interval between a start moment of any pulse train and a first-type pulse in the pulse train, or a time interval between a start moment of any detection cycle in any pulse train and a first-type pulse in the pulse train may be obtained through coding. The coding refers to generating a random number in a numerical range by using a method for generating a random number as a time interval. For example, when a pulse train is the first pulse train, a time interval between a start moment of the first pulse train and a first-type pulse in the first pulse train, and a time interval between any two adjacent second pulses in the first pulse train may be set to random numbers generated through different coding, so as to improve anti-interference performance in the first pulse train.

In a possible design, after sending the first pulse train, the control apparatus may further control a receive module to receive a first echo signal, and then control the transmit module to transmit a third pulse train, where the third pulse train is different from the first pulse train.

In this design, after it is determined that a point cloud corresponding to the first echo signal is abnormal, the transmit module may be controlled to transmit the third pulse train. That the point cloud corresponding to the first echo signal is abnormal means that a pixel or a field of view on the point cloud corresponding to the first echo signal is displayed as an abnormal state, for example, is displayed as an interference point, a noise point, or an empty point, or a distance, intensity, or reflectivity reported by the pixel or the field of view is inaccurate through subsequent measurement, or the like. In this design, the control apparatus can further adjust a subsequently transmitted pulse train when the point cloud of the first echo signal corresponding to the first pulse train is abnormal, so that the subsequently transmitted pulse train can generate a normal point cloud, thereby improving detection accuracy.

In a possible design, when the pulses included in the first pulse train are transmitted in a plurality of detection cycles, the control apparatus may receive sub-echo signals in the plurality of detection cycles, and then accumulate pulses successfully detected in the sub-echo signals in the plurality of detection cycles, to obtain the first echo signal. In this way, the first echo signal is obtained through accumulation, so that all information about the echo signals in all the detection cycles of the first pulse train can be comprehensively used for subsequent analysis, thereby avoiding performing analysis a plurality of times by using a small amount of one-si ded information, and helping improve efficiency of subsequent analysis.

In a possible design, the third pulse train may include M₅ first-type pulses, and a value of M₅ is greater than a value of M₁. In this way, as a quantity of pulses included in the pulse train increases, a quantity of time intervals between pulses included in the pulse train also increases accordingly. Because a time interval between pulses is related to a random number generated by coding, it is equivalent to increasing a quantity of time intervals that are included in the pulse train and whose values are obtained by using random numbers, which helps improve anti-interference performance in the third pulse train. The third pulse train may be generated by increasing a quantity of detection cycles and/or increasing a quantity of first-type pulses in one or more detection cycles on the basis of the first pulse train, the newly added detection cycle may be kept consistent with the detection cycle in the first pulse train, and an interval between the newly added first-type pulse and another pulse may be constrained by specified disturbance.

For example, in the foregoing design, when determining that no valid signal exists in the echo signal corresponding to the first pulse train, the control apparatus may transmit a third pulse train whose quantity of first-type pulses is greater than a quantity of first-type pulses in the first pulse train.

In a possible design, a time interval between a first-type pulse transmitted in each detection cycle in the third pulse train and a start moment of each detection cycle may be different from a time interval between a first-type pulse transmitted in each detection cycle in the first pulse train and a start moment of each detection cycle; and/or a time interval between a first-type pulse and an adjacent second-type pulse that are transmitted in each detection cycle in the third pulse train may be different from a time interval between a first-type pulse and an adjacent second-type pulse that are transmitted in each detection cycle in the first pulse train.

For example, in the foregoing design, when determining that there are a plurality of valid signals in the first echo signal, the control apparatus may transmit a third pulse train in which a time interval between a start moment of a detection cycle and a first-type pulse is different from that of the first pulse train, so that an anti-interference characteristic between the third pulse train and an adjacent pulse train of the third pulse train is increased by refreshing the time interval of the third pulse train.

In a possible design, when determining that the point cloud corresponding to the first echo signal is normal, the control apparatus may transmit a third pulse train that is the same as the first pulse train, so as to continue to perform detection by using the first pulse train that has a relatively good intra-train anti-interference capability and a relatively good inter-train anti-interference capability. That the point cloud corresponding to the first echo signal is normal may also be understood as that there is a single valid signal in the first echo signal.

In a possible design, after the first pulse train is sent, the received first echo signal may include a sub-echo signal corresponding to the first pulse train, and may further include a sub-echo signal corresponding to an interference pulse. Therefore, the control apparatus may perform the following analysis on each sub-echo signal in the first echo signal, to determine whether the point cloud corresponding to the first echo signal is abnormal:

Comparison of time intervals in a pulse train: The control apparatus may compare a time interval between any two adjacent pulses in any detection cycle in the first pulse train with a time interval between any two adjacent pulses in each sub-echo signal. If the comparison succeeds, it indicates that the sub-echo signal can perfectly match the first pulse train, and further indicates that the sub-echo signal is a sub-echo signal corresponding to the first pulse train, and a point cloud corresponding to the sub-echo signal is normal. If the comparison fails, it indicates that the sub-echo signal cannot perfectly match the first pulse train, and further indicates that the sub-echo signal may be an abnormal echo signal. For example, the sub-echo signal may be a sub-echo signal corresponding to an interference pulse, or may be a sub-echo signal corresponding to the first pulse train but has a slight deviation. In this case, the control apparatus may label the sub-echo signal as a "potential interference signal".

Comparison of time intervals between pulse trains: After all sub-echo signals in the first echo signal are compared, the control apparatus may calculate, for each sub-echo signal labeled as the "potential interference signal", a difference between a time interval between each first-type pulse in each sub-echo signal labeled as the "potential interference signal" and a start moment of the sub-echo signal and a time interval between each first-type pulse in an adjacent echo signal of the first echo signal and a start moment of the adjacent echo signal; calculate a difference between a time interval between each first-type pulse in the first pulse train and a start moment of the first pulse train and a time interval between each first-type pulse in an adjacent pulse train of the first pulse train and a start moment of the adjacent pulse train; and when the two differences do not exceed a preset first deviation threshold, compare the time interval between each first-type pulse in each sub-echo signal labeled as the "potential interference signal" and the start moment of the sub-echo signal with the time interval between each first-type pulse in the first pulse train and the start moment of the first pulse train (or compare the time interval between each first-type pulse in the adjacent echo signal of the first echo signal and the start moment of the adjacent echo signal with the time interval between each first-type pulse in the adjacent pulse train of the first pulse train and the start moment of the adjacent pulse train). If a difference between the two time intervals does not exceed a preset second deviation threshold, the control apparatus modifies the label of the sub-echo signal to "valid signal". The preset first deviation threshold and the preset second deviation threshold may be the same, or may be different, and may be set by a person skilled in the art based on experience, or may be determined based on an experiment. This is not specifically limited.

Point cloud confirmation: After all sub-echo signals labeled as "potential interference signal" are analyzed, if labels of all the sub-echo signals are not modified, it indicates that there is no valid signal in the first echo signal, and a point cloud corresponding to the first echo signal is abnormal; or if a label of only one sub-echo signal is modified to "valid signal", it indicates that there is a single valid signal in the first echo signal, and the point cloud corresponding to the first echo signal is normal. If labels of at least two sub-echo signals are modified to "valid signal", an interference signal may also be matched as a valid signal due to an error in the foregoing matching process. Theoretically, the matching result is incorrect. However, because the point cloud displays the at least two sub-echo signals labeled as "valid signal", the point cloud corresponding to the first echo signal is also abnormal.

It should be noted that, in the foregoing design, labeling the sub-echo signal is merely an example of an identification manner. This application does not limit any implementation of identifying a potential interference signal or a valid signal, provided that the LiDAR can identify a sub-echo signal that is determined, through matching, as a potential interference signal or a valid signal.

In the foregoing design, whether there is a valid signal in an echo signal and whether there is one valid signal or a plurality of valid signals in the echo signal are comprehensively determined from two perspectives: an intra-pulse-train perspective and an inter-pulse-train perspective. This helps make a pulse train adjusted with reference to the result more conform to a real situation, and effectively improve accuracy of pulse adjustment.

According to a second aspect, this application provides a control method. The method is applicable to a control apparatus, and the method includes: The control apparatus controls a transmit module to transmit a fourth pulse train, a fifth pulse train, and a sixth pulse train. The fourth pulse train includes M₁ first-type pulses, the fifth pulse train includes M₂ second-type pulses, and the sixth pulse train includes M₁ first-type pulses; or the fourth pulse train includes M₂ second-type pulses, the fifth pulse train includes M₁ first-type pulses, and the sixth pulse train includes M₂ second-type pulses, where a power of the M₁ first-type pulses is greater than a power of the M₂ second-type pulses, M₁ is an integer greater than 1, and M₂ is a positive integer. According to this design, the control apparatus can not only transmit at least two first-type pulses in one pulse train to improve a detection effect for a far-field target, but also obtain a missing detection result in the fifth pulse train in a differential manner by using a detection result of the fourth pulse train and a detection result of the sixth pulse train, to improve point cloud construction precision.

It should be noted that the designs in the first aspect are also applicable to the second aspect. Details are not described in this application again.

According to a third aspect, this application provides a control apparatus, including at least one processor and an interface circuit, where the interface circuit is configured to provide data or a code instruction for the at least one processor, and the at least one processor is configured to implement the method according to any one of the first aspect or the second aspect by using a logic circuit or executing the code instruction.

According to a fourth aspect, this application provides a chip, including a processor and an interface. The processor is configured to read an instruction by using the interface, to perform the method according to any one of the first aspect or the second aspect.

According to a fifth aspect, a LiDAR is provided, including a control apparatus and a transmit module, where the control apparatus is configured to perform the control method according to any one of the first aspect or the second aspect, and the transmit module is configured to send a pulse train under control of the control apparatus.

In a possible design, the LiDAR further includes a scanning mechanism, and the scanning mechanism includes one or more of a multi-sided rotating mirror, a pendulum mirror, a micro-electro-mechanical system (micro-electro-mechanical system, MEMS) scanning mirror, or a prism.

In a possible design, the LiDAR further includes a receive module, the receive module is configured to receive an echo signal, and the control apparatus is further configured to determine a target feature based on the echo signal.

According to a sixth aspect, this application provides a terminal device, including the LiDAR according to any design of the fifth aspect. For example, examples of the terminal device include but are not limited to: a smart home device (such as a television, a floor sweeping robot, a smart desk lamp, an acoustic system, an intelligent lighting system, an electrical control system, home background music, a home theater system, an intercom system, and a video surveillance system), an intelligent transportation device (such as a car, a ship, an uncrewed aerial vehicle, a train, a freight car, and a truck), an intelligent manufacturing device (such as a robot, an industrial device, intelligent logistics, and a smart factory), and an intelligent terminal (a mobile phone, a computer, a tablet computer, a palmtop computer, a desktop computer, a headset, an acoustic device, a wearable device, a vehicle-mounted device, a virtual reality device, an augmented reality device, and the like).

According to a seventh aspect, this application provides a computer-readable storage medium. The computer-readable storage medium stores a computer program. When the computer program is run, the method according to any one of the first aspect or the second aspect is performed.

According to an eighth aspect, this application provides a computer program product. When the computer program product runs on a processor, the method according to any one of the first aspect or the second aspect is implemented.

For beneficial effects of the second aspect to the eighth aspect, refer to technical effects that can be achieved by corresponding designs in the first aspect. Details are not described herein again.

### BRIEF DESCRIPTION OF DRAWINGS

FIG. 1 shows an example of a schematic diagram of an application scenario of a LiDAR according to an embodiment of this application;
FIG. 2 shows an example of a schematic diagram of an internal architecture of a LiDAR according to an embodiment of this application;
FIG. 3 shows an example of a schematic interaction flowchart corresponding to a control method according to an embodiment of this application;
FIG. 4 shows an example of a schematic diagram of a detection field of view according to an embodiment of this application;
FIG. 5 shows an example of a schematic diagram of presentation forms of different pulse trains according to an embodiment of this application;
FIG. 6 shows an example of a schematic diagram of presentation forms of pulse trains sent in a detection cycle according to an embodiment of this application;
FIG. 7 shows an example of a schematic diagram of a time interval for transmitting a pulse train according to an embodiment of this application;
FIG. 8 shows an example of a schematic flowchart of a transmit pulse adjustment method according to an embodiment of this application;
FIG. 9 shows an example of a schematic diagram of presentation forms of a first pulse train and a first echo signal according to an embodiment of this application;
FIG. 10 shows an example of a schematic flowchart of time interval comparison between pulse trains according to an embodiment of this application; and
FIG. 11 shows an example of a schematic diagram of an implementation of adding a first-type pulse according to an embodiment of this application.

### DESCRIPTION OF EMBODIMENTS

The control method disclosed in this application may be applied to a terminal device having a pulse transmitting capability, and in particular, is applicable to a terminal device having a laser transmitting capability. The terminal device may be an intelligent device having a pulse transmitting capability, including but not limited to: a smart home device, such as a television, a floor sweeping robot, a smart desk lamp, an acoustic system, an intelligent lighting system, an electrical control system, home background music, a home theater system, an intercom system, and a video surveillance system; an intelligent transportation device, such as a car, a ship, an uncrewed aerial vehicle, a train, a freight car, and a truck; and an intelligent manufacturing device, such as a robot, an industrial device, intelligent logistics, and a smart factory. Alternatively, the terminal device may be a computer device having a pulse transmitting capability, for example, a desktop computer, a personal computer, or a server. It should be further understood that the terminal device may alternatively be a portable electronic device having a pulse transmitting capability, for example, a mobile phone, a tablet computer, a palmtop computer, a headset, an acoustic device, a wearable device (such as a smartwatch), a vehicle-mounted device, a virtual reality device, or an augmented reality device. An example of the portable electronic device includes but is not limited to a portable electronic device with the iOS^{®} operating system, the Android^{®} operating system, the Microsoft^{®} operating system, the Harmony^{®} operating system, or another operating system. The portable electronic device may alternatively be, for example, a laptop computer (Laptop) with a touch-sensitive surface (for example, a touch panel).

The following describes the technical solutions in the embodiments of this application in detail with reference to specific accompanying drawings.

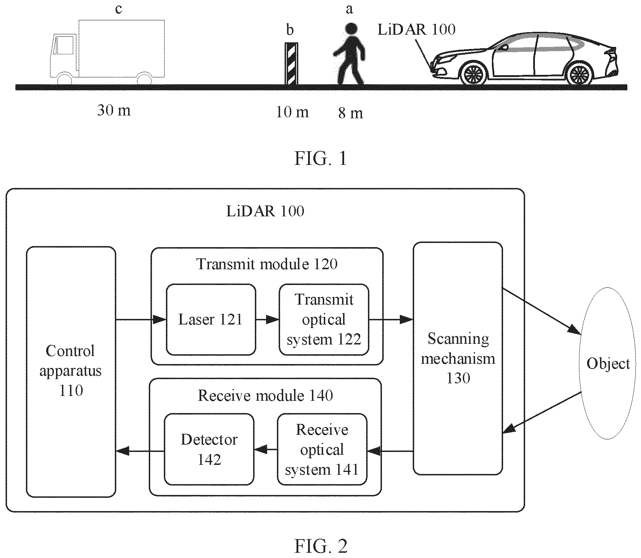

In a specific application scenario, the control method may be applied to a LiDAR. FIG. 1 shows an example of a schematic diagram of an application scenario of a LiDAR according to an embodiment of this application. In this example, a LiDAR 100 is installed on a vehicle, and therefore is also referred to as a vehicle-mounted LiDAR. In addition to the vehicle-mounted LiDAR, the LiDAR further includes a ship-mounted LiDAR installed on a ship and a machine-mounted LiDAR installed on a machine. In a possible example, as shown in FIG. 1, the LiDAR 100 may be specifically installed at a head location of the vehicle. In a traveling process of the vehicle, the LiDAR 100 may send a laser signal. The laser signal is reflected by an object in front of the vehicle after being irradiated to the object. A reflected echo signal may be received by the LiDAR 100. Then, the LiDAR 100 detects, based on the echo signal, information about the obstacle in front of the vehicle, such as a size and a distance of the obstacle, so as to implement a driving function of the vehicle by using the obstacle information, for example, including but not limited to autonomous driving or assisted driving.

It should be noted that the LiDAR 100 may be one of a mechanical LiDAR, a liquid LiDAR, a pure solid-state LiDAR, or a hybrid solid-state LiDAR (also referred to as a semi-solid-state LiDAR), or may be another type of LiDAR. This is not specifically limited in embodiments of this application.

Further, for example, FIG. 2 shows a schematic diagram of an internal architecture of a LiDAR according to an embodiment of this application. As shown in FIG. 2, in this example, the LiDAR 100 may include a control apparatus 110, a transmit module 120, a scanning mechanism 130, and a receive module 140. The transmit module 120 includes a laser 121 and a transmit optical system 122, and the receive module 140 includes a receive optical system 141 and a detector 142. In the LiDAR 100, the control apparatus 110 may have a signal control and processing capability, and may be connected to another component in the LiDAR 100 by using a controller area network (controller area network, CAN) bus or in another manner. The laser 121 is a device capable of transmitting a laser, and may be any one of a semiconductor laser, a gas laser, an optical fiber laser, a solid-state laser, a dye laser, a diode laser, or an excimer laser. The transmit optical system 122 and the receive optical system 141 are systems including optical elements. The optical elements include but are not limited to a lens, a light filter, a polarizer, a reflector, a beam splitting mirror, a prism, a window piece, a scattering piece, and the like. The scanning mechanism 130 may include one or more of a multi-sided rotating mirror, a pendulum mirror, a micro-electro-mechanical system (micro-electro-mechanical system, MEMS) scanning mirror, or a prism. The detector 142 may include but is not limited to an avalanche photo diode (avalanche photo diode, APD), a single photon avalanche diode (single photon avalanche diode, SPAD), a photodiode (positive intrinsic-negative, PIN), a silicon photo multiplier (silicon photo multiplier, SiPM), and the like.

In an implementation, the control apparatus 110 may control the laser 121 to emit a laser pulse, and control the transmit optical system 122 to transmit the laser pulse from the laser 121, and may further control the scanning mechanism 130 to scan and traverse a detection area by using the laser pulse. It should be noted that the scanning mechanism 130 is not a mandatory component, and a traversal function that can be implemented by the scanning mechanism 130 may be essentially implemented by using an array design inside the transmit module and the receive module and an array control apparatus. Further, the laser pulse is reflected by the object after the object in the detection area is scanned, and the reflected echo signal is received by the receive optical system 141 under control of the control apparatus 110 and transmitted to the detector 142, so that the detector 142 presents, under control of the control apparatus 110, a light spot corresponding to the echo signal, generates an electrical signal corresponding to the light spot, and sends the electrical signal to the control apparatus 110. Then, the control apparatus 110 analyzes the electrical signal to generate a point cloud, the point cloud may be used to obtain target information such as a distance, an orientation, a height, a speed, a posture, and even a shape of the object, and may be further used subsequently to plan autonomous driving or assisted driving of the vehicle with reference to other sensor information of the vehicle.

It should be noted that the control capability and the processing capability of the control apparatus 110 may be integrated into one component for implementation, or may be separately implemented in a plurality of components. For example, the control apparatus 110 may be specifically an integrated circuit chip, for example, may be a general-purpose processor, may be a field programmable gate array (field programmable gate array, FPGA), or may be an application specific integrated chip (application specific integrated circuit, ASIC), may be a system on chip (system on chip, SoC), may be a network processor (network processor, NP), may be a digital signal processor (digital signal processor, DSP), may be a micro controller unit (micro controller unit, MCU), or may be a programmable logic device (programmable logic device, PLD), or another programmable logic device, a discrete gate or a transistor logic device, a discrete hardware component, or another integrated chip. The control apparatus 110 may include a central processing unit (central processor unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), and/or a baseband processor. This is not specifically limited.

In the foregoing implementation, the laser pulse plays an important role in object detection in the detection area. Generally, a boundary point between a near-field target and a far-field target is 20 m. It is assumed that a detection area includes the following three objects shown in FIG. 1: a pedestrian a that is 8 m away from the vehicle head, a road signpost b that is 10 m away from the vehicle head, and a freight car c that is 30 m away from the vehicle head. Because a distance between the pedestrian a and the LiDAR 100 installed on the vehicle head, and a distance between the road signpost b and the LiDAR 100 are both within 20 m, and a distance between the freight car c and the LiDAR 100 installed on the vehicle head is beyond 20 m, the pedestrian a and the road signpost b are near-field targets, and the freight car c is a far-field target. It can be learned that both the near-field target and the far-field target exist in the detection area of the LiDAR 100. The near-field target needs to be detected by using a low-power laser pulse, and the far-field target needs to be detected by using a high-power laser pulse. Currently, in the industry, to ensure that both a near-field target and a far-field target can be detected, a laser pulse with a relatively high power is usually configured. However, as the power of the laser pulse increases, energy of a clutter signal generated through reflecting the laser pulse by each component in the LiDAR 100 also increases, and a power of an echo signal reflected back by the near-field target also increases. In one aspect, the strong clutter signal and the strong near-field echo signal overlap each other, which causes a detection effect for the near-field target to deteriorate, and further reduces point cloud quality of the LiDAR 100. In another aspect, the receive module 140 can receive only an echo signal within a specific power range. If the power of the near-field echo signal is excessively large, the receive module 140 cannot receive or identify the near-field echo signal because the power exceeds an upper limit of a power that can be received by the receive module 140. Consequently, the point cloud quality of the LiDAR 100 is further reduced. Therefore, how to configure a laser pulse plays an important role in accurately detecting far-field and near-field targets to obtain a high-quality point cloud.

To accurately detect a far-field target and a near-field target to obtain a high-quality point cloud, currently, a commonly used control solution is as follows: The control apparatus first controls the transmit module to transmit a test pulse, and then a transmit pulse is transmitted based on a detection effect of an echo signal corresponding to the test pulse. For example, when point cloud quality of the echo signal is not high, a transmit pulse with a power lower than that of the test pulse is transmitted, so as to reduce a clutter signal detected in the near field by reducing the power of the transmit pulse, and to improve point cloud quality. Although this control solution can adaptively determine a transmit pulse suitable for the current detection area, this is a type of post-feedback, which may cause untimely adjustment due to untimely feedback, and consequently detection accuracy cannot be effectively improved. In addition, in this control solution, the subsequently transmitted transmit pulse needs to be determined based on the echo signal. When the echo signal has a specific error or an adjustment process has a specific error, an adjustment result is inaccurate, and consequently detection accuracy is further reduced. In addition, an extra test pulse is sent, which clearly is not conducive to improving utilization of the transmit pulse. It can be learned that, the control solution provided in the industry currently cannot effectively improve accuracy of detecting far-field and near-field targets, and cannot improve utilization of a transmit pulse.

In view of this, this application provides a control method, to improve accuracy of detecting far-field and near-field targets and improve utilization of a transmit pulse.

It should be noted that the control method in this application may be applied to the LiDAR, or may be applied to another apparatus, device, or chip other than the LiDAR, for example, applied to another intelligent terminal that has a pulse transmitting function other than the LiDAR, or applied to a component of another intelligent terminal. The component includes but is not limited to another sensor such as a controller, a chip, or a camera, and another component. Alternatively, the control method in this application may be applied to the foregoing driving scenario, or may be applied to another imaging system other than the foregoing driving scenario, for example, a three-dimensional building modeling system, a terrain mapping system, or a rendezvous and docking system. In addition, with evolution of a system architecture and emergence of a new scenario, the control method provided in this application is also applicable to a similar technical problem. This is not specifically limited in this application.

The following describes specific implementation of the control method in this application with reference to specific embodiments. It is clear that the described embodiments are merely some but not all of the embodiments of this application.

It should be noted that the terms "system" and "network" in embodiments of this application may be used interchangeably. "A plurality of" means two or more than two. "And/or" describes an association relationship between associated objects, and represents that three relationships may exist. For example, A and/or B may represent the following cases: Only A exists, both A and B exist, and only B exists, where A and B may be singular or plural. "One or more of the following items (pieces)" or a similar expression thereof means any combination of these items, including any combination of singular items (pieces) or plural items (pieces). For example, one or more of a, b, or c may represent a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish a plurality of obj ects, but are not used to limit priorities or importance degrees of the plurality of objects. For example, a first pulse train, a second pulse train, a third pulse train, a fourth pulse train, a fifth pulse train, and a sixth pulse train are merely used to distinguish different pulse trains, but do not indicate different priorities, importance degrees, or the like of these pulse trains.

### [Embodiment 1]

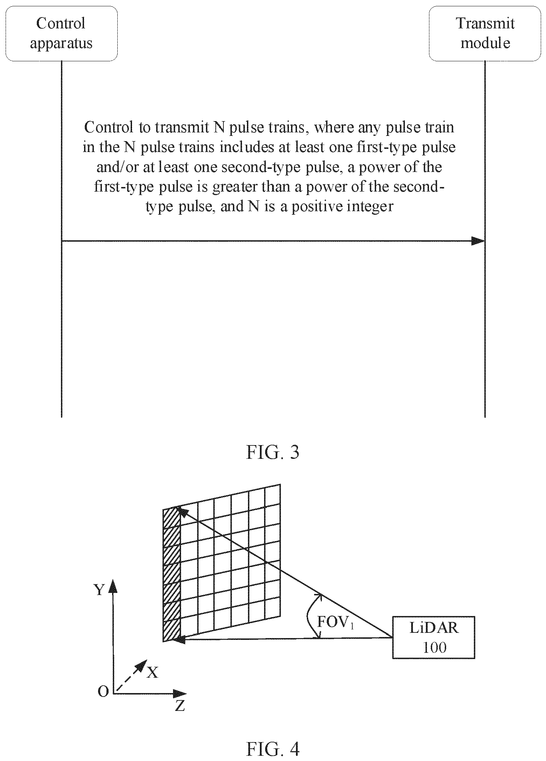

Based on the LiDAR 100 shown in FIG. 2, FIG. 3 shows an example of a schematic interaction flowchart corresponding to a control method according to an embodiment of this application. As shown in FIG. 3, the method includes: A control apparatus controls a transmit module to transmit N pulse trains, where any one of the N pulse trains includes at least one first-type pulse and/or at least one second-type pulse, a power of the first-type pulse is greater than a power of the second-type pulse, and N is a positive integer. The control apparatus may control, based on a scanning manner, the transmit module to send the N pulse trains in one or more times of transmission. For example, when the scanning manner is point spot scanning, the control apparatus may control the transmit module to send the N pulse trains in N times of transmission, and send one pulse train in the N pulse trains each time, to detect one pixel on an object. When the scanning manner is line spot scanning, the control apparatus may control the transmit module to transmit, each time, a plurality of pulse trains located in a linear area corresponding to a current line spot, to detect a linear area on the object. When the scanning manner is planar array scanning, the control apparatus may control the transmit module to transmit, each time, a plurality of pulse trains located in a planar area corresponding to a current planar array, to detect a planar area on the object.

Based on the foregoing implementations, several possible pulse train transmission manners are described by using examples.

In an example, the control apparatus may control the transmit module to transmit a first pulse train, where the first pulse train includes M₁ first-type pulses and M₂ second-type pulses; and control the transmit module to transmit a second pulse train, where the second pulse train includes M₃ first-type pulses and/or M₄ second-type pulses. M₁ is a positive integer greater than or equal to 2, M₂, M₃, and M₄ are positive integers, values of M₁ and M₃ may be the same or different, and values of M₂ and M₄ may be the same or different. This is not specifically limited. In this example, the high-power first-type pulse in the first pulse train may be used to detect a far-field target, and the low-power second-type pulse may be used to detect a near-field target. The far-field target and the near-field target are detected by using respective matched pulses, so that accuracy of detecting the far-field target and the near-field target can be effectively improved, thereby improving point cloud quality of the LiDAR. In addition, the at least two first-type pulses are transmitted in the first pulse train. In one aspect, the far-field target can be detected by using the at least two high-power pulses, thereby further improving a detection effect for the far-field target, and further improving quality of a far-field point cloud. In another aspect, a quantity of first-type pulses is increased, and a quantity of time intervals included in the first pulse train can be correspondingly increased, so that more precise pulse position modulation is performed on the at least two first-type pulses based on the increased time intervals, thereby effectively improving anti-interference performance of the first pulse train. In still another aspect, a problem that a distance is blurred because the detected target exceeds a ranging range of one detection cycle can be further resolved through joint ranging of the plurality of first-type pulses. In addition, before the first pulse train and the second pulse train are transmitted, a test pulse does not need to be transmitted in advance, thereby improving transmit pulse utilization.

In another example, the control apparatus may control the transmit module to transmit a fourth pulse train, a fifth pulse train, and a sixth pulse train. The fourth pulse train includes M₁ first-type pulses, the fifth pulse train includes M₂ second-type pulses, and the sixth pulse train includes M₁ first-type pulses; or the fourth pulse train includes M₂ second-type pulses, the fifth pulse train includes M₁ first-type pulses, and the sixth pulse train includes M₂ second-type pulses. M₁ is a positive integer greater than 2, and M₂, M₃, and M₄ are positive integers. In this example, in addition to transmitting the at least two first-type pulses in one pulse train to improve a detection effect for a far-field target, a missing detection result in the fifth pulse train can be obtained in a differential manner by using a detection result of the fourth pulse train and a detection result of the sixth pulse train. For example, when the fourth pulse train includes M₁ first-type pulses, the fifth pulse train includes M₂ second-type pulses, and the sixth pulse train includes M₁ first-type pulses, the fourth pulse train and the sixth pulse train are used to detect the far-field target, and the fifth pulse train is used to detect a near-field target. Even if the fifth pulse train does not include a high-power first-type pulse, and the fifth pulse train cannot directly detect the far-field target, a differential value of the far-field detection results of the fourth pulse train and the sixth pulse train that are adjacent to the fifth pulse train may be used as a detection result of the fifth pulse train, to supplement the far-field detection result of the fifth pulse train, so as to improve construction precision of a far-field point cloud. On the contrary, when the fourth pulse train includes M₂ second-type pulses, the fifth pulse train includes M₁ first-type pulses, and the sixth pulse train includes M₂ second-type pulses, a differential value of near-field detection results of the fourth pulse train and the sixth pulse train that are adjacent to the fifth pulse train may be used as a detection result of the fifth pulse train, to supplement the near-field detection result of the fifth pulse train, so as to improve construction precision of a near-field point cloud.

In still another example, to improve construction precision of both the far-field point cloud and the near-field point cloud, the control apparatus may alternatively control the transmit module to transmit a pulse train 1 including M₁ first-type pulses, a pulse train 2 including M₂ second-type pulses, a pulse train 3 including M₁ first-type pulses, and a pulse train 4 including M₂ second-type pulses, to obtain a far-field detection result of the pulse train 2 in a differential manner by using the pulse train 1 and the pulse train 3, and obtain a near-field detection result of the pulse train 3 in a differential manner by using the pulse train 2 and the pulse train 4, so as to improve overall point cloud quality of the LiDAR. Alternatively, the control apparatus controls the transmit module to transmit a pulse train 5 including M₂ second-type pulses, a pulse train 6 including M₁ first-type pulses, a pulse train 7 including M₂ second-type pulses, and a pulse train 8 including M₁ first-type pulses, to obtain a near-field detection result of the pulse train 6 in a differential manner by using the pulse train 5 and the pulse train 7, and obtain a far-field detection result of the pulse train 7 in a differential manner by using the pulse train 6 and the pulse train 8, so as to improve overall point cloud quality of the LiDAR.

It should be noted that, in the foregoing two examples including the differential operation, the differential operation of pulse trains may be flexibly configured based on a point cloud construction precision requirement of a LiDAR system. For example, when a current pulse train configuration has reached a point cloud construction precision requirement of all time periods, an entire field of view, and all frames, differential processing may not be performed. However, when a pulse train configuration of all time periods or some time periods, all fields of view or some fields of view, or all frames or some frames in a current pulse train configuration fails to meet a point cloud construction precision requirement of the corresponding time period, the corresponding field of view, or the corresponding frame, differential processing may be performed on the corresponding time period, the corresponding field of view, or the corresponding frame, so as to meet the point cloud construction precision requirement of all the time periods, the entire field of view, and all the frames.

In a possible implementation, any two of the N pulse trains may meet one or more of the following conditions:
Condition 1: Transmission time periods of the two pulse trains are different. In other words, the two pulse trains are transmitted in sequence, and the transmission time periods of the two pulse trains are in sequence. For example, when a line spot is used to scan an object, a laser is first driven, based on one of the two pulse trains, to emit light, so as to generate a line spot to scan an area of the object, and then the laser is driven, based on the other one of the two pulse trains, to emit light, so as to generate another line spot to scan another area of the object.
Condition 2: The two pulse trains correspond to different transmit submodules. For example, when a line spot is used to scan an object, a plurality of transmit submodules simultaneously emit respective corresponding pulse trains, and these simultaneously emitted pulse trains drive a laser tube to emit light, thereby presenting a line spot to scan a specific area of the object.
Condition 3: The two pulse trains correspond to different pixels in a same detection field of view. A detection field of view is an area that is of an object and that can be scanned in one detection, or a pixel area that is correspondingly presented on a detector in one detection. For example, FIG. 4 shows an example of a schematic diagram of a detection field of view according to an embodiment of this application. In this example, the LiDAR scans an object by using a line spot. If the line spot is a line spot parallel to a Y-axis and scans the object along an X-axis direction, the detection field of view is a vertical strip-shaped area marked by diagonal lines in FIG. 4. The vertical strip-shaped area includes a plurality of pixels, each pixel corresponds to a respective pulse train, pulse trains corresponding to different pixels may be the same or may be different. This is not specifically limited.
Condition 4: The two pulse trains correspond to different detection fields of view. For example, FIG. 4 is still used as an example. Pixel areas corresponding to the two pulse trains belong to different vertical strip-shaped areas. For example, one pulse train corresponds to a pixel in the vertical strip-shaped area marked with diagonal lines in FIG. 4, and the other pulse train corresponds to a pixel in an area that is not marked with diagonal lines in FIG. 4.
Condition 5: The two pulse trains correspond to different receive submodules. A receive submodule may be a detector or a detector group in a receive module. The detector group is used as an example. The receive module includes a plurality of detectors, the plurality of detectors may be divided into at least two detector groups, and each detector group corresponds to one pixel area and is configured to present a light spot transmitted to the pixel area. When the receive submodules are detectors, the two receive submodules corresponding to the two pulse trains may belong to a same detector group, or may belong to different detector groups. When the receive submodules are detector groups, the two receive submodules corresponding to the two pulse trains belong to different detector groups.

In the foregoing implementations, the control apparatus can set an association relationship between pulse trains based on one or more factors including a transmission time period, a transmit submodule, a detection field of view, a pixel, or a receive submodule, thereby helping improve flexibility of setting a pulse train, and making the control method compatible with various pulse train configuration scenarios.

In a possible implementation, the control apparatus may generate a point cloud based on one or more pulse trains in the N pulse trains. For example, transmitting the first pulse train and the second pulse train is used as an example. In one manner, the control apparatus may generate a point cloud based on echo signals corresponding to at least the first pulse train and the second pulse train (for example, based on the first pulse train and the second pulse train, or based on the first pulse train, the second pulse train, and another pulse train in the N pulse trains). In this way, more comprehensive information may be obtained by using detection results of a plurality of pulse trains, and point cloud construction quality is improved. In another manner, the control apparatus may generate a first point cloud based on an echo signal corresponding to at least the first pulse train, and generate a second point cloud based on an echo signal corresponding to at least the second pulse train. The first point cloud is different from the second point cloud. In this way, point cloud construction efficiency can be improved by enabling the pulse trains to correspond to different point clouds.

In this embodiment of this application, for pulse trains that are in the N pulse trains and that include at least one first-type pulse, the at least one first-type pulse included in these pulse trains may be the same, for example, a quantity, a power, a pulse width, and duration of the first-type pulse are the same; or the at least one first-type pulse included in these pulse trains is different from each other, for example, at least one of a quantity, a power, a pulse width, or duration of the first-type pulse is different. Correspondingly, for pulse trains that are in the N pulse trains and that include at least one second-type pulse, the at least one second-type pulse included in these pulse trains may be the same, for example, a quantity, a power, a pulse width, and duration of the second-type pulse are the same; or the at least one second-type pulse included in these pulse trains is different from each other, for example, at least one of a quantity, a power, a pulse width, or duration of the second-type pulse is different.

In a possible implementation, the power and the quantity (or other information such as the pulse width or the duration may be further included) of the at least one first-type pulse may be determined based on a remote measurement requirement, and the power and the quantity (or other information such as the pulse width or the duration may be further included) of the at least one second-type pulse may be determined based on a dynamic optimization requirement. The remote measurement requirement is a requirement for detecting a far-field target, and includes but is not limited to a distance to a farthest far-field target that is expected to be measured, reliability of measuring the far-field target, and the like. For example, when the expected maximum distance to the far-field target that can be measured is larger and the reliability of measuring the far-field target is higher, the power of the at least one first-type pulse may be configured to be larger, and the quantity of the at least one first-type pulse may be configured to be larger. In this way, higher detection reliability and a longer detection distance can be implemented by sending more high-power first-type pulses and using a higher power. Correspondingly, the dynamic optimization requirement is a requirement for detecting a near-field target, and includes but is not limited to echo signal strength of a nearest near-field target that is expected to be measured, a success rate of measuring the near-field target, a stray light feature, and the like. When it is expected that stronger echo signal strength of a near-field target can be measured, a higher success rate of measuring the near-field target is obtained, and stronger stray light of the near-field target is detected, it indicates that a larger dynamic requirement is required, a wider power range of the at least one second-type pulse may be configured, and a larger quantity of the at least one second-type pulse may be configured, so that a higher detection success rate and a wider dynamic range can be implemented by sending more low-power pulses and using a higher power range. It should be understood that, in addition to configuring pulse power and quantity, other information such as a pulse width and duration may be further configured. This is not specifically limited in this application.

For example, when only the far-field target needs to be detected, the pulse train may include the first-type pulse but does not include the second-type pulse. When only the near-field target needs to be detected, the pulse train may include the second-type pulse but does not include the first-type pulse. When both the far-field target and the near-field target need to be detected, the pulse train may include both the first-type pulse and the second-type pulse.

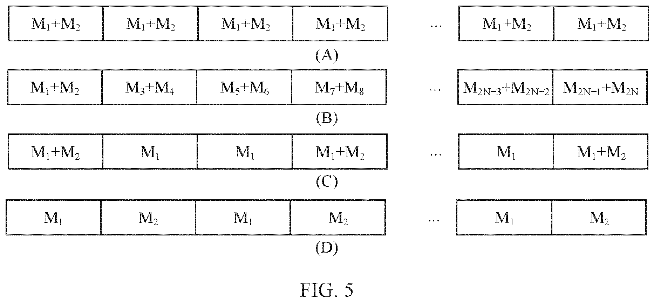

In a possible implementation, types and a quantity of pulses actually included in each of the N pulse trains may be determined with reference to a repetition frequency limitation, a far-field angular resolution, and a near-field angular resolution of the LiDAR. A repetition frequency of the LiDAR refers to a quantity of times that the LiDAR can transmit pulses per unit time. For example, a repetition frequency of a LiDAR is 40 Hz, which means that the LiDAR can transmit 40 pulses per unit time. The unit time herein may be generally set to 1s. The far-field angular resolution refers to an angular resolution used for detecting a far-field target, and the near-field angular resolution refers to an angular resolution used for detecting a near-field target. The far-field angular resolution and the near-field angular resolution can be found in a product manual or an instruction manual of the LiDAR. In some cases, the two angular resolutions are limited by fixed values, and in other cases, the two angular resolutions are each limited by a supported range. When a supported range is used for limitation, ranges of the far-field angular resolution and the near-field angular resolution may overlap or may not overlap. If the resolutions are not described in the product manual or the instruction manual, optionally, the far-field angular resolution and the near-field angular resolution may be the same by default. In addition, a frame frequency, a field of view, a distance, and the like of the LiDAR may be specified in the product manual. These factors jointly determine the repetition frequency limitation of the LiDAR. For example, if it is determined, based on the remote measurement requirement and the dynamic optimization requirement, that M₁ first-type pulses and M₂ second-type pulses need to be configured in each pulse train, refer to FIG. 5. FIG. 5 shows an example of a schematic diagram of presentation forms of different pulse trains according to an embodiment of this application.

Case 1: When the quantity M₁ of the first-type pulses and the quantity M₂ of the second-type pulses are not limited by the repetition frequency of the LiDAR (that is, a sum of a quantity of first-type pulses and a quantity of second-type pulses that need to be transmitted per unit time is not greater than a quantity of pulses that can be transmitted by the LiDAR per unit time), it means that the repetition frequency capability of the LiDAR supports transmitting M₁ first-type pulses and M₂ second-type pulses in a time period corresponding to one pulse train. In this case, as shown in (A) in FIG. 5, each pulse train may include M₁ first-type pulses and M₂ second-type pulses, so that both the far-field angular resolution and the near-field angular resolution can reach preset or configured optimal angular resolutions. It should be understood that, if the N pulse trains determined based on the remote measurement requirement and the dynamic optimization requirement include: M₁ first-type pulses and M₂ second-type pulses, M₃ first-type pulses and M₄ second-type pulses, ..., and M_{2N-1} first-type pulses and M_{2N} second-type pulses, and a sum of quantities of pulses included in each pulse train is not limited to the repetition frequency of the LiDAR, a presentation form of the N pulse trains may be shown in (B) in FIG. 5. Values of M₁, M₃, ..., and M_{2N-1} may be the same or different, and values of M₂, M₄, ..., and M_{2N} may be the same or different.

Case 2: When the quantity M₁ of the first-type pulses and the quantity M₂ of the second-type pulses are limited by the repetition frequency of the LiDAR (that is, a sum of a quantity of first-type pulses and a quantity of second-type pulses that need to be transmitted per unit time is greater than a quantity of pulses that can be transmitted by the LiDAR per unit time), and a limitation degree is not higher than a first preset degree, although the repetition frequency capability of the LiDAR cannot transmit M₁ first-type pulses and M₂ second-type pulses in a time period of one pulse train, the repetition frequency limitation degree of the LiDAR is relatively small. In this case, as shown in (C) in FIG. 5, the control apparatus may configure that at least one of the N pulse trains includes M₁ first-type pulses but does not include M₂ second-type pulses, all other pulse trains except the at least one pulse train include M₁ first-type pulses and M₂ second-type pulses each, so as to match the repetition frequency capability of the LiDAR by reducing the near-field angular resolution, and ensure an optimal far-field angular resolution, thereby ensuring far-field point cloud quality.

Case 3: When the quantity M₁ of the first-type pulses and the quantity M₂ of the second-type pulses are limited by the repetition frequency of the LiDAR and a limitation degree is higher than the first preset degree, it means that the repetition frequency limitation degree of the LiDAR is relatively heavy, and the repetition frequency capability of the LiDAR cannot be matched by discarding only the near-field angular resolution. In this case, as shown in (D) in FIG. 5, the control apparatus may configure at least three adjacent pulse trains in the N pulse trains to be arranged in a manner of M₁ first-type pulses, M₂ second-type pulses, and M₁ first-type pulses, or in a manner of M₂ second-type pulses, M₁ first-type pulses, and M₂ second-type pulses, and another pulse train other than the at least three adjacent pulse trains includes M₁ first-type pulses and/or M₂ second-type pulses. In this way, as shown in (D) in FIG. 5, the first pulse train, the second pulse train, and the third pulse train from left to right are arranged in a manner of M₁ first-type pulses, M₂ second-type pulses, and M₁ first-type pulses, so that a far-field detection result of the second pulse train may be obtained through interpolation by using detection results of the first pulse train and the third pulse train. In this way, an interpolation far-field angular resolution can be implemented in an interpolation manner when the far-field angular resolution cannot be ensured. Similarly, as shown in (D) in FIG. 5, the second pulse train, the third pulse train, and the fourth pulse train from left to right are arranged in a manner of M₂ second-type pulses, M₁ first-type pulses, and M₂ second-type pulses, so that a near-field detection result of the third pulse train may be obtained through interpolation by using detection results of the second pulse train and the fourth pulse train. In this way, an interpolation near-field angular resolution can be implemented in an interpolation manner when the near-field angular resolution cannot be ensured.

It should be noted that, when the far-field angular resolution and the near-field angular resolution are presented in a range form, the abandoning the near-field angular resolution or the far-field angular resolution means that it is no longer ensured that the near-field angular resolution or the far-field angular resolution meets a maximum value in the range, but is finally not less than a minimum value in the range, so that a pulse train adjusted based on a repetition frequency situation can still meet a minimum angular resolution requirement of the LiDAR.

In a possible implementation, powers of the first-type pulses may be the same or different, and powers of the second-type pulses may be the same or different. For example, the powers of the first-type pulses may be set to be the same, and the powers of the second-type pulses may be set to be different. In this way, complexity of processing the far-field detection pulses performed by the LiDAR in a transmission process can be simplified, and a dynamic range of near-field detection can be increased. For example, a configuration process of the first pulse train is used as an example. In an implementation, the control apparatus may determine, based on a remote detection requirement, powers and a quantity of first-type pulses that meet the remote detection requirement. It is assumed that M₁ first pulses TX1, each with a power of P₁, are determined. In addition, types, powers, and a quantity of second-type pulses that meet a dynamic optimization requirement are determined based on the dynamic optimization requirement. For example, a type-1 second pulse Tx21 with a power of P₂₁ is first configured, where P₂₁<P₁. It is determined whether the type-1 second pulse Tx21 is sufficient to meet the dynamic optimization requirement; and if not, a type-2 second pulse Tx22 with a power of P₂₂ is configured, where P₂₂<P₂₁<P₁ or P₂₁<P₂₂<P₁. It is determined whether the type-1 second pulse Tx21 and the type-2 second pulse Tx22 are sufficient to meet the dynamic optimization requirement; and if not, a type-3 second pulse Tx23 with a power of P₂₃ is configured, where P₂₃<P₂₂<P₂₁<P₁, or P₂₃<P₂₁<P₂₂<P₁, or P₂₂<P₂₁<P₂₃<P₁, or P₂₂<P₂₃<P₂₁<P₁, or P₂₁<P₂₂<P₂₃<P₁, or P₂₁<P₂₃<P₂₂<P₁; and so on, until K types of second pulses Tx21 to Tx2K that meet the dynamic optimization requirement are found. A total quantity of the K types of second pulses Tx21 to Tx2K is M₂, and K is a positive integer. In this way, after the first pulse train is configured, the M₁ first-type pulses in the first pulse train include the M₁ first pulses with the same powers; and the M₂ second-type pulses in the first pulse train include the K types of second pulses with different powers, where a sum of quantities of the K types of second pulses is M₂, and K is a positive integer.

Further, for example, the pulses included in the first pulse train may be transmitted in a plurality of detection cycles, and a pulse train transmitted in each detection cycle includes the first pulse Tx1 and/or one or more of the K types of second pulses Tx21 to Tx2K. One transmission and one reception are referred to as one detection cycle. In this way, the control apparatus may comprehensively determine a point cloud by using a plurality of detection results received in the plurality of detection cycles, thereby helping improve point cloud quality. Duration of each detection cycle in one pulse train may be equal, for example, 500 ns; or at least two detection cycles may correspond to different lengths of duration, for example, duration of all the detection cycles is 500 ns, 1000 ns, 1500 ns, ..., and so on. Preferably, the duration of each detection cycle may be set based on a quantity, powers, and the like of pulses transmitted in the detection cycle. When a power of a transmitted pulse is smaller or a quantity of transmitted pulses is smaller, the duration of a detection cycle may also be set to be smaller. In this way, the duration of each detection cycle is controlled, so that a total time for transmitting a pulse train can be effectively reduced.

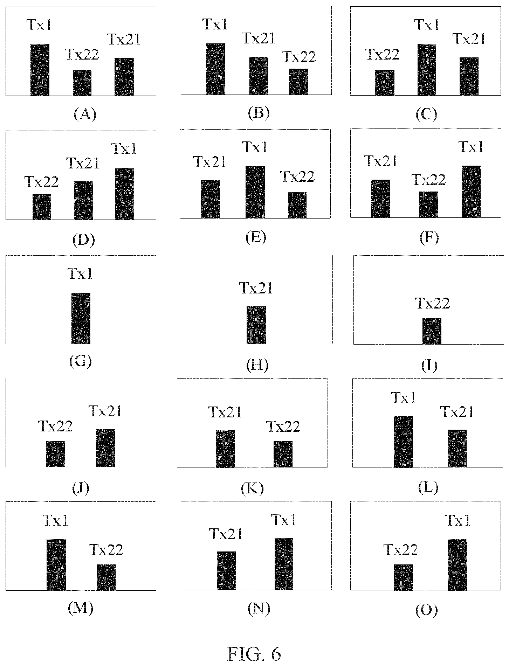

In a possible manner, pulse trains transmitted in any two detection cycles may include same quantities of pulses, and pulse types may also be the same. In this way, complexity of controlling pulse transmission can be reduced. In another possible manner, quantities of pulses and/or pulse types included in pulse trains transmitted in at least two detection cycles are different. In this way, flexibility of transmitting a pulse in each detection cycle can be improved. For example, if the second-type pulses include a type-1 second pulse Tx21 and a type-2 second pulse Tx22, but do not include another second pulse, a pulse train sent in any detection cycle may be one of the presentation forms shown in FIG. 6.

Presentation form 1: The pulse train sent in the detection cycle includes a first pulse Tx1, the type-1 second pulse Tx21, and the type-2 second pulse Tx22. A transmission manner may be: The first pulse Tx1, the type-1 second pulse Tx21, and the type-2 second pulse Tx22 are sequentially transmitted as shown in (A) in FIG. 6; or the first pulse Tx1, the type-2 second pulse Tx22, and the type-1 second pulse Tx21 are sequentially transmitted as shown in (B) in FIG. 6; or the type-2 second pulse Tx22, the first pulse Tx1, and the type-1 second pulse Tx21 are sequentially transmitted as shown in (C) in FIG. 6; or the type-2 second pulse Tx22, the type-1 second pulse Tx21, and the first pulse Tx1 are sequentially transmitted as shown in (D) in FIG. 6; or the type-1 second pulse Tx21, the first pulse Tx1, and the type-2 second pulse Tx22 are sequentially transmitted as shown in (E) in FIG. 6; or the type-1 second pulse Tx21, the type-2 second pulse Tx22, and the first pulse Tx1 are sequentially transmitted as shown in (F) in FIG. 6.

Presentation form 2: The pulse train sent in the detection cycle includes one of the first pulse Tx1, the type-1 second pulse Tx21, or the type-2 second pulse Tx22. For example, the first pulse Tx1 may be included but the type-1 second pulse Tx21 and the type-2 second pulse Tx22 are not included as shown in (G) in FIG. 6; or the type-1 second pulse Tx21 may be included but the first pulse Tx1 and the type-2 second pulse Tx22 are not included as shown in (H) in FIG. 6; or the type-2 second pulse Tx22 may be included but the first pulse Tx1 and the type-1 second pulse Tx21 are not included as shown in (I) in FIG. 6.

Presentation form 3: The pulse train sent in the detection cycle includes the type-1 second pulse Tx21 and the type-2 second pulse Tx22. A transmission manner may be: The type-2 second pulse Tx22 and the type-1 second pulse Tx21 are sequentially transmitted as shown in (J) in FIG. 6; or the type-1 second pulse Tx21 and the type-2 second pulse Tx22 are sequentially transmitted as shown in (K) in FIG. 6.

Presentation form 4: The pulse train sent in the detection cycle includes the first pulse TX1, and one of the type-1 second pulse TX21 and the type-2 second pulse TX22. A transmission manner may be: The first pulse TX1 and the type-1 second pulse Tx21 are sequentially transmitted as shown in (L) in FIG. 6; or the first pulse TX1 and the type-2 second pulse Tx22 are sequentially transmitted as shown in (M) in FIG. 6; or the type-1 second pulse Tx21 and the first pulse TX1 are sequentially transmitted as shown in (N) in FIG. 6; or the type-2 second pulse Tx22 and the first pulse TX1 are sequentially transmitted as shown in (O) in FIG. 6.

The following describes, based on the pulse train presentation form corresponding to the detection cycle shown in FIG. 6, several possible pulse implementations of the N pulse trains in FIG. 5 as examples.

For the N pulse trains shown in (A) in FIG. 5 or (B) in FIG. 5, each pulse train includes a first-type pulse and a second-type pulse. In this case, any pulse train may be implemented by using one or a combination of the following configurations: any one of (A) to (F) in FIG. 6; (G) in FIG. 6 and (J) in FIG. 6; (G) in FIG. 6 and (K) in FIG. 6; (G) in FIG. 6, (H) in FIG. 6, and (I) in FIG. 6; (L) in FIG. 6 and (I) in FIG. 6; (M) in FIG. 6 and (H) in FIG. 6; (N) in FIG. 6 and (I) in FIG. 6; and (O) in FIG. 6 and (H) in FIG. 6. A smaller quantity of pulses in a detection cycle indicates smaller total duration of the detection cycle. Three pulses are transmitted in each detection cycle in (A) to (F) in FIG. 6, two pulses are transmitted in each detection cycle in (J) to (O) in FIG. 6, and one pulse is transmitted in each detection cycle in (G) to (I) in FIG. 6. Therefore, using any pulse train in (A) to (F) in FIG. 6 may result in a shortest detection time; using (G), (H), and (I) in FIG. 6 may result in a longest detection time; and using (G) and (J) in FIG. 6, (G) and (K) in FIG. 6, (L) and (I) in FIG. 6, (M) and (H) in FIG. 6, (N) and (I) in FIG. 6, or (O) and (H) in FIG. 6 may result in a medium detection time.

For the N pulse trains shown in (C) in FIG. 5, a pulse train including the first-type pulse and the second-type pulse may be implemented according to one or a combination of the foregoing configurations, and a pulse train including the first-type pulse but not including the second-type pulse may be implemented according to (G) in FIG. 6.

For the N pulse trains shown in (D) in FIG. 5, a pulse train including the first-type pulse but not including the second-type pulse may be implemented according to (G) in FIG. 6, and a pulse train including the second-type pulse but not including the first-type pulse may be implemented according to one or a combination of the following: (H) and (I) in FIG. 6; (J) in FIG. 6; and (K) in FIG. 6.

In this embodiment of this application, a pulse train including a first-type pulse (which includes a pulse train including a first-type pulse but not including a second-type pulse, and a pulse train including a first-type pulse and a second-type pulse) is grouped into a first pulse train set, a pulse train including a second-type pulse (which includes a pulse train including a second-type pulse but not including a first-type pulse, and a pulse train including a first-type pulse and a second-type pulse) is grouped into a second pulse train set, and a pulse train including a first-type pulse and a second-type pulse is grouped into a third pulse train set. There may be an intersection set between the first pulse train set and the second pulse train set, or there may be no intersection set between the first pulse train set and the second pulse train set; and there is an intersection set between the third pulse train set and the first pulse train set or between the third pulse train set and the second pulse train set. In addition, for any one of the first pulse train set, the second pulse train set, and the third pulse train set, two adjacent pulse trains in the pulse train set may be adjacent or may not be adjacent in a case in which positions are not disordered. For example, it is assumed that there are a pulse train 1, a pulse train 2, a pulse train 3, and a pulse train 4 that are sequentially arranged, the pulse train 1 includes a first-type pulse but does not include a second-type pulse, the pulse train 2 includes a second-type pulse but does not include a first-type pulse, and the pulse train 3 and the pulse train 4 each include a first-type pulse and a second-type pulse. In this case, the first pulse train set includes the pulse train 1, the pulse train 3, and the pulse train 4; the second pulse train set includes the pulse train 2, the pulse train 3, and the pulse train 4; and the third pulse train set includes the pulse train 3 and the pulse train 4. Based on this, the pulse train 1 and the pulse train 3 are adjacent pulse trains in the first pulse train set. However, in a case in which positions are not disordered, the pulse train 1 and the pulse train 3 are non-adjacent pulse trains because the pulse train 1 and the pulse train 3 are spaced by the pulse train 2. The pulse train 3 and the pulse train 4 are adjacent pulse trains in the first pulse train set, and are also adjacent pulse trains when the positions are not disordered. Based on this, the following describes some possible setting manners of a time interval between any two pulses included in each pulse train and a time interval between two pulses in any two pulse trains by using examples. The time interval between two pulses is a time interval between transmission times of the two pulses. The control apparatus may generate each pulse train based on a determined time interval corresponding to each pulse train.

### Time interval in a pulse train

After the LiDAR emits a first-type pulse, a stray optical signal may be further generated in the LiDAR. Duration of the stray optical signal is related to factors such as a pulse width and a power of the first-type pulse, and a maximum value of the duration is generally determined by the pulse width of the first-type pulse. Generally, duration of a stray optical signal generated by a first-type pulse whose pulse width is within 10 ns generally ranges between 1 ns and 50 ns. The duration of the stray optical signal is duration from a time when the first-type pulse is sent to a time when the stray optical signal is received. For a LiDAR in which a stray optical signal exists, the first echo signal corresponding to a first-type pulse is usually a stray optical signal. Based on this, in this application, duration from a time when the first-type pulse is sent to a time when the first echo signal corresponding to the first-type pulse is received is referred to as a time interval corresponding to a detection blind area of the first-type pulse. Further, for any pulse train in the third pulse train set, the pulse train includes a first-type pulse and a second-type pulse. When setting a time interval between the first-type pulse and an adjacent second-type pulse, the LiDAR may design the time interval with reference to the time interval corresponding to the detection blind area of the first-type pulse. For example, the time interval between the first-type pulse and the adjacent second-type pulse in the pulse train is set to be not less than the time interval corresponding to the detection blind area of the first-type pulse, for example, the time interval may be set to a sum of the time interval corresponding to the detection blind area of the first-type pulse and random disturbance duration. For example, a time interval between the first pulse Tx1 and the type-2 second pulse Tx22 in the detection cycle shown in (A) in FIG. 6 is set to a sum of a time interval corresponding to a detection blind area of the first pulse Tx1 and the random disturbance duration. The random disturbance duration refers to additional disturbance duration (which may be obtained through experiment verification) caused by an uncontrollable factor such as hardware, or disturbance duration that is set for a purpose (for example, adding disturbance to improve anti-interference performance). In this way, when the transmit module is controlled to send the pulse train, after sending the first-type pulse, the control apparatus sends the second-type pulse after receiving the echo signal corresponding to the first-type pulse. This can effectively prevent the first-type pulse or the echo signal of the first-type pulse from affecting a detection process of the second-type pulse, and improve anti-interference performance between far-field detection and near-field detection.

It should be noted that, in this embodiment of this application, a pulse width, a power, and the like of the second-type pulse are specially designed, so that a stray optical signal correspondingly generated by the second-type pulse is relatively weak, to achieve a negligible degree, so as to avoid generating a detection blind area corresponding to the second-type pulse. However, if the second-type pulse in the LiDAR actually also has a corresponding detection blind area due to some factors, the time interval between the second-type pulse and the adjacent first-type pulse may be further set with reference to a time interval corresponding to the detection blind area of the second-type pulse, for example, may be set to a sum of the time interval corresponding to the detection blind area of the second-type pulse and the random disturbance duration. For related content of the time interval corresponding to the detection blind area of the second-type pulse, refer to related descriptions of the time interval corresponding to the detection blind area of the first-type pulse. Details are not described herein again.

Further, a time interval between any two adjacent pulses other than the first-type pulse and the adjacent second-type pulse, for example, any two adjacent second-type pulses in any pulse train in the third pulse train set, any two adjacent first-type pulses in a pulse train that is in the first pulse train set and that includes first-type pulses but does not include a second-type pulse, or any two adjacent second-type pulses in a pulse train that is in the second pulse train set and that includes second-type pulses but does not include a first-type pulse, and a time interval between a start moment of any detection cycle in any pulse train and a first-type pulses in the detection cycle may be obtained through coding. The coding means that a random number is generated in a value range by using a method for generating a random number as a time interval. For example, the detection cycle shown in (A) in FIG. 6 is used as an example. The control apparatus may generate a random number through coding and set the random number as a time interval between a start moment of the detection cycle and the first pulse Tx1, and generate another random number through coding and set the another random number as a time interval between the type-2 second pulse Tx22 and the type-1 second pulse TX21. The two random numbers are generated randomly, and may be the same or different, which is not specifically limited.

### Time interval between pulse trains

In a possible example, a time interval of first-type pulses corresponding to any two pulse trains in the first pulse train set may be determined based on a far-field angular resolution. The time interval of first-type pulses corresponding to any two pulse trains may be a time interval between central transmission moments of all first-type pulses included in any two pulse trains. For example, it is assumed that a pulse train 1 and a pulse train 2 exist, the pulse train 1 includes a first-type pulse 1 and a first-type pulse 2, a transmission moment of the first-type pulse 1 is 5 ns, and a transmission moment of the first-type pulse 2 is 10 ns; and the pulse train 2 includes a first-type pulse 3, a first-type pulse 4, and a first-type pulse 5, a transmission moment of the first-type pulse 3 is 20 ns, a transmission moment of the first-type pulse 4 is 22 ns, and a transmission moment of the first-type pulse 5 is 26 ns. In this case, a central transmission moment of the two first-type pulses in the pulse train 1 is 7.5 ns, a central transmission moment of the three first-type pulses in the pulse train 2 is 23 ns, and it may be determined that a time interval of first-type pulses corresponding to the pulse train 1 and the pulse train 2 is 23 ns minus 7.5 ns, that is, 15.5 ns. In another example, if pulses included in any two pulse trains in the first pulse train set and pulse arrangement manners are the same, the time interval of first-type pulses corresponding to the any two pulse trains may alternatively be a time interval between transmission moments of the I₁^{th} first-type pulses in the any two pulse trains, where I₁ is any positive integer less than or equal to a quantity of pulses included in any pulse train.

In a possible example, the time interval of first-type pulses corresponding to any two pulse trains in the first pulse train set may be a ratio of the far-field angular resolution to a scanning speed. The scanning speed may be a preset parameter in the LiDAR, or may be obtained through calculation based on another parameter in the LiDAR. The another parameter includes but is not limited to a frame frequency, a repetition frequency, and the like of the LiDAR. In addition, the scanning speed may be implemented by using a scanning mechanism in the LiDAR, or may be implemented by using an array design inside the transmit module or the receive module in the LiDAR and an array control apparatus. For example, when the far-field angular resolution is 1°, and the scanning speed is 1°/ms, the time interval of first-type pulses corresponding to any two adjacent pulse trains may be 1 ms. When the time interval is a time interval between central transmission moments of all first-type pulses included in any two adjacent pulse trains, if the central transmission moment of all first-type pulses in the former pulse train is 7.5 ms, the central transmission moment of all first-type pulses in the latter pulse train is 8.5 ms. When the time interval is a time interval between transmission moments of the 1^{st} first-type pulses included in any two adjacent pulse trains, if the transmission moment of the 1^{st} first-type pulse in the former pulse train is 5 ns, the transmission moment of the 1^{st} first-type pulse in the latter pulse train is 1 ms+5 ns. In addition, because the far-field angular resolution remains a fixed value after being selected, a time interval of first-type pulses corresponding to any two adjacent pulse trains in the first pulse train set is the same, that is, a time interval between transmission moments of first-type pulses corresponding to any two adjacent pulse trains is the same. "The same time interval" is sameness in an ideal state. The sameness may further include sameness with a specific deviation caused by an environment factor or another factor. In other words, as long as a value of the time interval falls within a range between a positive deviation and a negative deviation, it is considered that the time interval is the same in this embodiment of this application.

In a possible example, a time interval of second-type pulses corresponding to any two pulse trains in the second pulse train set is determined based on a near-field angular resolution, and may be, for example, a ratio of the near-field angular resolution to a scanning speed. For example, if the scanning speed of the LiDAR is 1°/ms, and the near-field angular resolution is 3°, the time interval of second-type pulses corresponding to any two adjacent pulse trains may be 3 ms. The time interval of second-type pulses corresponding to any two pulse trains may be a time interval between central transmission moments of all second-type pulses included in the any two pulse trains; or when pulses included in any two pulse trains and pulse arrangement manners are the same, the time interval of first-type pulses corresponding to any two pulse trains may alternatively be a time interval between transmission moments of the I₂^{th} second-type pulses in the any two pulse trains. I₂ is any positive integer less than or equal to a quantity of pulses included in any pulse train. In addition, because the near-field angular resolution remains a fixed value after being selected, a time interval of second-type pulses corresponding to any two adj acent pulse trains in the second pulse train set is the same.

In a possible example, when a ratio of the far-field angular resolution to the near-field angular resolution is an integer, a time interval offset of first-type pulses and second-type pulses corresponding to any two pulse trains in the third pulse train set is the same. A time interval offset of first-type pulses and second-type pulses corresponding to two pulse trains is a difference between a time interval between a transmission moment of a first-type pulse and a transmission moment of a second-type pulse in the first pulse train and a time interval between a transmission moment of a first-type pulse and a transmission moment of a second-type pulse in the second pulse train. For example, a transmission moment of a first-type pulse in any pulse train may be a central transmission moment of all first-type pulses in the pulse train, and a transmission moment of a second-type pulse in any pulse train may be a central transmission moment of all second-type pulses in the pulse train; or when pulses included in any two pulse trains and pulse arrangement manners are the same, a transmission moment of a first-type pulse in any pulse train may be a transmission moment of the 1^{st} first-type pulse in the pulse train, and a transmission moment of a second-type pulse in any pulse train may be a transmission moment of the 1^{st} second-type pulse in the pulse train; or a transmission moment of a first-type pulse in any pulse train may be a transmission moment of the last first-type pulse in the pulse train, and a transmission moment of a second-type pulse in any pulse train may be a transmission moment of the last second-type pulse in the pulse train; or the like. This is not specifically limited.

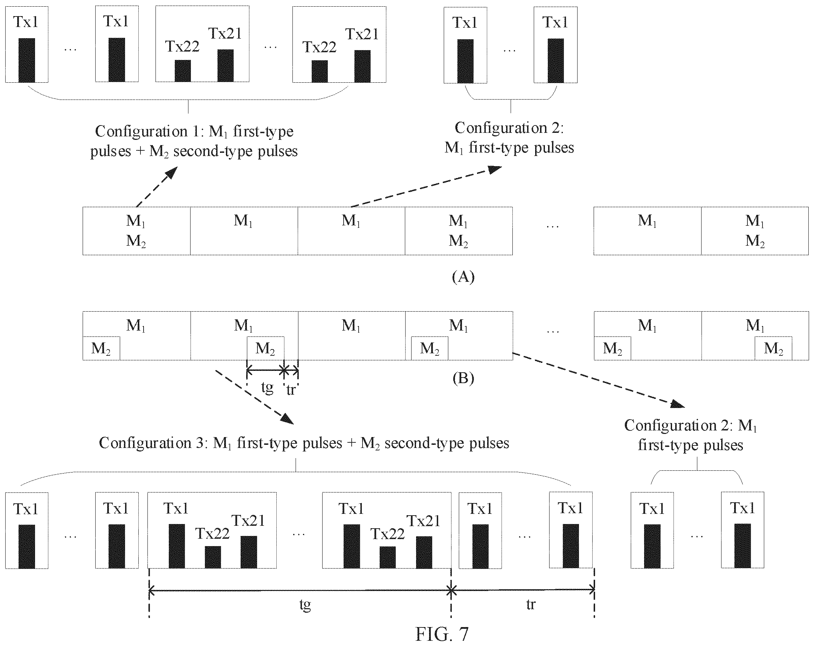

In the foregoing example, "the same time interval offsets" is sameness in an ideal state. The sameness may further include sameness with a specific deviation caused by an environment factor or another factor. In other words, as long as a value of the time interval offset falls within a range between a positive deviation and a negative deviation, it is considered that the time interval offsets are the same in this embodiment of this application. The time interval offset of first-type pulses and second-type pulses corresponding to two pulse trains may be set based on an integer relationship between the far-field angular resolution and the near-field angular resolution. For example, based on the correlation between the far-field angular resolution and the time interval of first-type pulses and the correlation between the near-field angular resolution and the time interval of second-type pulses in the foregoing examples, when the scanning speed is 1°/ms, if the far-field angular resolution is 1°, and the near-field angular resolution is 3°, a time interval of first-type pulses in any two adjacent pulse trains is 1 ms, and a time interval of second-type pulses in any two adjacent pulse trains is 3 ms. For a specific arrangement manner, refer to (A) in FIG. 7. Every 3×M₁ first-type pulses may correspond to 1×M₂ second-type pulses, each pulse train including M₁ first-type pulses and M₂ second-type pulses may be configured with reference to configuration 1 in (A) in FIG. 7, and each pulse train including M₁ first-type pulses but not including M₂ second-type pulses may be configured with reference to configuration 2 in (A) in FIG. 7. It can be learned that, when a time interval of first-type pulses and a time interval of second-type pulses in any two adjacent pulse trains are in a multiple relationship, position relationships between first-type pulses and second-type pulses in any two adjacent pulse trains are the same, that is, a time interval offset of first-type pulses and second-type pulses corresponding to any two pulse trains is the same, that is, a position relationship between a second-type pulse and a first-type pulse in different pulse trains shown in (A) in FIG. 7 is fixed.

In a possible example, when the ratio of the far-field angular resolution to the near-field angular resolution is not an integer, time interval offsets of first-type pulses and second-type pulses corresponding to at least two pulse trains in the third pulse train set are different. Corresponding to "the same time interval offsets", "different time interval offsets" is also a difference in an ideal state. The difference may tolerate a specific deviation caused by an environment factor or another factor. In other words, in this embodiment of this application, it is considered that time interval offsets are different only when a value of the time interval offset is outside a range between a positive deviation and a negative deviation. Based on the correlation between the far-field angular resolution and the time interval of first-type pulses and the correlation between the near-field angular resolution and the time interval of second-type pulses in the foregoing examples, when the scanning speed is 1°/ms, if the far-field angular resolution is 1° and the near-field angular resolution is 1.8°, the time interval of first-type pulses in any two adjacent pulse trains is 1 ms, and the time interval of second-type pulses in any two adjacent pulse trains is 1.8 ms. For a specific arrangement manner, refer to (B) in FIG. 7. Every 1.8×M₁ first-type pulses may correspond to 1×M₂ second-type pulses, each pulse train including M₁ first-type pulses and M₂ second-type pulses may be configured with reference to configuration 3 in (B) in FIG. 7, and each pulse train including M₁ first-type pulses but not including M₂ second-type pulses may be configured with reference to configuration 2 in (B) in FIG. 7. It can be seen that, when the time interval of first-type pulses and the time interval of second-type pulses in any two adjacent pulse trains are not in a multiple relationship, the non-integer ratio makes first-type pulses in different pulse trains unable to be aligned in time sequence. As a result, time interval offsets of first-type pulses and second-type pulses in some pulse trains are different, that is, ratios of tg to tr in different pulse trains shown in (B) in FIG. 7 are different.

It should be noted that, the foregoing configuration 1 uses a combination of two pulse configurations of (G) and (J) in FIG. 6, and the foregoing configuration 3 uses a combination of two pulse configurations of (G) and (A) in FIG. 6. This is merely an example of configuration manners. In another example, other pulses shown in FIG. 6 may alternatively be used for combined configuration, provided that the time interval shown in FIG. 7 is met. Details are not listed one by one in this application.

In the foregoing implementation, the time interval between first-type pulses and/or second-type pulses is determined with reference to the far field angular resolution and/or the near field angular resolution, so that a relative position of each pulse in a pulse train can be accurately configured based on a real requirement of an angular resolution, so that each pulse is transmitted based on a detection requirement in each detection cycle, thereby improving a detection effect.

The foregoing Embodiment 1 describes a specific implementation process of the transmit pulse control method. This application further provides a transmit pulse adjustment method. The following uses the first pulse train in the foregoing Embodiment 1 as an example for description, and another pulse train may be performed with reference to the first pulse train.

### [Embodiment 2]

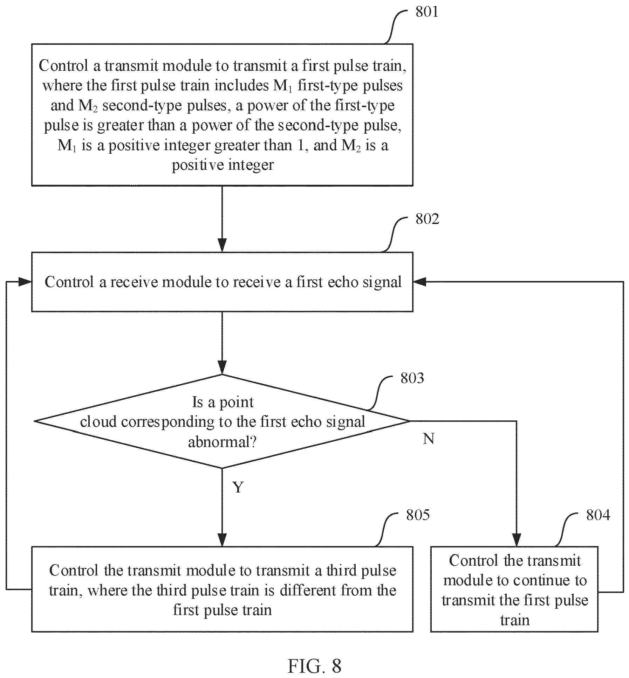

FIG. 8 shows an example of a schematic flowchart of a transmit pulse adjustment method according to an embodiment of this application. As shown in FIG. 8, the method includes the following steps.

Step 801: A control apparatus controls a transmit module to transmit a first pulse train, where the first pulse train includes M₁ first-type pulses and M₂ second-type pulses, a power of the first-type pulse is greater than a power of the second-type pulse, M₁ is a positive integer greater than 1, and M₂ is a positive integer.

Step 802: The control apparatus controls a receive module to receive a first echo signal.

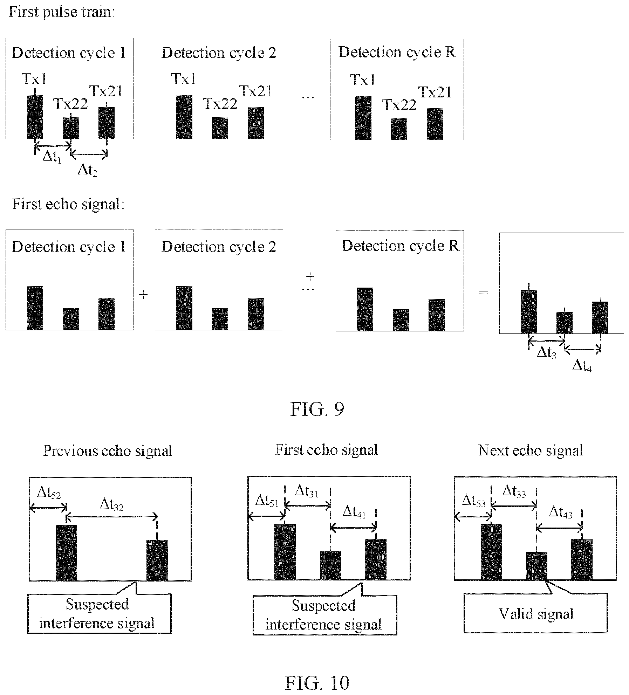

In an optional implementation, FIG. 9 shows an example of a schematic diagram of presentation forms of a first pulse train and a first echo signal according to an embodiment of this application. In this example, it is assumed that the pulses included in the first pulse train are transmitted in R (R is a positive integer greater than or equal to 2) detection cycles, and quantities, types, and time intervals of pulses transmitted in any two detection cycles of the R detection cycles are the same. For example, pulses transmitted in each detection cycle include a first pulse TX1, the 2^{nd} second pulse TX22, and the 1^{st} second pulse TX21, a time interval between the first pulse TX1 and the 2^{nd} second pulse TX22 is Δt₁, and a time interval between the 2^{nd} second pulse TX22 and the 1^{st} second pulse TX21 is Δt₂. In this case, the control apparatus may control the receive module to sequentially receive sub-echo signals in R detection cycles, and then accumulate pulses successfully detected in the sub-echo signals in the R detection cycles, to obtain the first echo signal. In this way, the first echo signal is obtained through accumulation, so that all information about the echo signals in all the detection cycles of the first pulse train can be comprehensively analyzed, and there is no need to perform analysis a plurality of times by using a small amount of one-sided information, thereby helping improve efficiency of subsequent analysis.

Step 803: The control apparatus determines whether a point cloud corresponding to the first echo signal is abnormal, and if no, performs step 804, or if yes, performs step 805.

In the foregoing step 803, that the point cloud corresponding to the first echo signal is abnormal means that a pixel or a field of view on the point cloud corresponding to the first echo signal is displayed as an abnormal state, for example, is displayed as an interference point, a noise point, or an empty point, or a distance, intensity, or reflectivity reported by the pixel or the field of view is inaccurate through subsequent measurement, or the like.

In a possible implementation, after the first pulse train is sent, the received first echo signal may include a sub-echo signal corresponding to the first pulse train, and may further include a sub-echo signal corresponding to an interference pulse. Therefore, the control apparatus may perform the following analysis on each sub-echo signal in the first echo signal, to determine whether the point cloud corresponding to the first echo signal is abnormal:

### Comparison of time intervals in a pulse train

In comparison of time intervals in a pulse train, for each sub-echo signal in the first echo signal, the control apparatus may compare a time interval between any two adjacent pulses in any detection cycle in the first pulse train with a time interval between any two adjacent pulses in each sub-echo signal. If the comparison succeeds, it indicates that the sub-echo signal can perfectly match the first pulse train, and further indicates that the sub-echo signal is a sub-echo signal corresponding to the first pulse train, and a point cloud corresponding to the sub-echo signal is normal. If the comparison fails, it indicates that the sub-echo signal cannot perfectly match the first pulse train, and further indicates that the sub-echo signal may be an abnormal echo signal. For example, the sub-echo signal may be a sub-echo signal corresponding to an interference pulse, or may be a sub-echo signal corresponding to the first pulse train but has a slight deviation. In this case, the control apparatus may label the sub-echo signal as a "potential interference signal".

For example, the first pulse train and the first echo signal shown in FIG. 9 are still used as an example. It is assumed that the first pulse train corresponds to only the first echo signal shown in FIG. 9 and does not correspond to another echo signal. In this case, after obtaining the first echo signal through accumulation, the control apparatus may calculate a time interval between any two adjacent pulses in the first echo signal. It is assumed that a time interval between the 1^{st} pulse and the 2^{nd} pulse in the first echo signal is Δt₃₁, and a time interval between the 2^{nd} pulse and the 3^{rd} pulse is Δt₄₁. In this case, the control apparatus may compare a time interval between any two adjacent pulses in any detection cycle in the first pulse train with the time interval between any two adjacent pulses in the first echo signal, that is, compare the time interval Δt₁ between the first pulse TX1 and the 2^{nd} second pulse TX22 in any detection cycle of the first pulse train with the time interval Δt₃₁ between the 1^{st} pulse and the 2^{nd} pulse in the first echo signal, and compare the time interval Δt₂ between the 2^{nd} second pulse TX22 and the 1^{st} second pulse TX21 in any detection cycle of the first pulse train with the time interval Δt₄₁ between the 2^{nd} pulse and the 3^{rd} pulse in the first echo signal. If the time intervals in the two comparisons are the same, it indicates that a time interval between the pulses in the first echo signal is the same as a time interval between the pulses in the first pulse train, the first echo signal can perfectly match the first pulse train, the first echo signal is a valid echo signal corresponding to the first pulse train, and the point cloud corresponding to the first echo signal is normal. On the contrary, if the time intervals in at least one of the two comparisons are different, it indicates that a time interval between at least two pulses in the first echo signal is different from a time interval between at least two pulses in the first pulse train, and the first echo signal cannot perfectly match the first pulse train. In this case, a "potential interference signal" label may be added to the first echo signal, and subsequently, whether the first echo signal is a valid echo signal or an interference signal needs to be determined by comparing time intervals between pulse trains.

It should be noted that, in the foregoing design, labeling a potential interference signal is merely an example of an identification manner. This application does not limit any implementation of identifying a potential interference signal, provided that the LiDAR can identify a sub-echo signal that is determined, through matching, as a potential interference signal.

### Comparison of time intervals between pulse trains

After comparing all the sub-echo signals in the first echo signal, the control apparatus may perform time interval comparison between pulse trains for each sub-echo signal labeled as the "suspected interference signal". A specific process is as follows:
The control apparatus may calculate a difference between a time interval between each first-type pulse in each sub-echo signal labeled as the "potential interference signal" and a start moment of the sub-echo signal and a time interval between each first-type pulse in an adjacent echo signal of the first echo signal and a start moment of the adjacent echo signal; calculate a difference between a time interval between each first-type pulse in the first pulse train and a start moment of the first pulse train and a time interval between each first-type pulse in an adjacent pulse train of the first pulse train and a start moment of the adjacent pulse train; and when the two differences do not exceed a preset first deviation threshold, compare the time interval between each first-type pulse in each sub-echo signal labeled as the "potential interference signal" and the start moment of the sub-echo signal with the time interval between each first-type pulse in the first pulse train and the start moment of the first pulse train (or compare the time interval between each first-type pulse in the adjacent echo signal of the first echo signal and the start moment of the adjacent echo signal with the time interval between each first-type pulse in the adjacent pulse train of the first pulse train and the start moment of the adjacent pulse train). If a difference between the two time intervals does not exceed a preset second deviation threshold, the control apparatus modifies the label of the sub-echo signal to "valid signal". It should be noted that, in this operation, if the adjacent echo signal includes only one sub-echo signal, only the one sub-echo signal of the adjacent echo signal needs to be compared; or if the adjacent echo signal includes a plurality of sub-echo signals, each sub-echo signal of the adjacent echo signal needs to be compared. As long as one sub-echo signal meets that a difference does not exceed the preset first deviation threshold and a difference does not exceed the preset second deviation threshold, the label may be modified. The preset first deviation threshold and the preset second deviation threshold may be the same, or may be different, and may be set by a person skilled in the art based on experience, or may be determined based on an experiment. This is not specifically limited.

For example, it is assumed that the control apparatus sequentially transmits a pulse train 1 and a pulse train 2, an echo signal corresponding to the pulse train 1 includes a sub-echo signal 1 and a sub-echo signal 2, and an echo signal corresponding to the pulse train 2 includes only a sub-echo signal 3. In this case, for the sub-echo signal 1, the control apparatus calculates a difference between a time interval between each first-type pulse in the sub-echo signal 1 and a start moment of the sub-echo signal 1 and a time interval between each first-type pulse in the sub-echo signal 3 and a start moment of the sub-echo signal 3, and calculates a difference between a time interval between each first-type pulse in the pulse train 1 and a start moment of the pulse train 1 and a time interval between each first-type pulse in the pulse train 2 and a start moment of the pulse train 2. When neither of the two differences is less than the preset first deviation threshold, the time interval between each first-type pulse in the sub-echo signal 1 and the start moment of the sub-echo signal 1 is compared with the time interval between each first-type pulse in the pulse train 1 and the start moment of the pulse train 1 (or the time interval between each first-type pulse in the sub-echo signal 3 and the start moment of the sub-echo signal 3 is compared with the time interval between each first-type pulse in the pulse train 2 and the start moment of the pulse train 2). If the two differences do not exceed the preset second deviation threshold, a label of the sub-echo signal 1 is modified to "valid signal". It should be noted that a comparison process of the sub-echo signal 2 is consistent with that of the sub-echo signal 1, and details are not described herein again.

Further, for example, the first pulse train and the first echo signal shown in FIG. 9 are still used as an example. It is assumed that a "potential interference signal" label is attached to the first echo signal according to the foregoing method for comparing time intervals in a pulse train, and both the preset first deviation threshold and the preset second deviation threshold are 6 ns. FIG. 10 shows an example of a schematic flowchart of time interval comparison between pulse trains according to an embodiment of this application. As shown in FIG. 10, in an implementation, the control apparatus may first obtain an adjacent echo signal of the first echo signal. The adjacent echo signal includes the previous echo signal (corresponding to the last pulse train transmitted before the first pulse train) formed by the last batch of sub-echo signals received before the first echo signal and a next echo signal (corresponding to the 1^{st} pulse train transmitted after the first pulse train) formed by the 1^{st} batch of sub-echo signals received after the first echo signal. Then, the control apparatus may calculate a difference between a time interval Δt₅₁ between each first-type pulse in the first echo signal and a start moment of the first echo signal and a time interval between each first-type pulse in any adjacent echo signal and a start moment of the adjacent echo signal (if the adjacent echo signal is the previous echo signal, the difference is Δt₅₁-Δt₅₂; or if the adjacent echo signal is the next echo signal, the difference is Δt₅₁-Δt₅₃), and calculate a difference between a time interval between each first-type pulse in a transmit pulse train corresponding to the first echo signal and a start moment of the transmit pulse train and a time interval between each first-type pulse in the adjacent pulse train and a start moment of the adjacent pulse train. Further, if a time interval between a first-type pulse of the first echo signal and the start moment of the first echo signal is 50 ns, and a time interval between a first-type pulse of the adjacent echo signal of the first echo signal and the start moment of the adjacent echo signal is 100 ns, a difference may be calculated as 50 ns. Correspondingly, if a time interval between a first-type pulse of the transmit pulse train corresponding to the first echo signal and the start moment of the transmit pulse train is 55 ns, and a time interval between a first-type pulse in an adjacent transmit pulse train of the transmit pulse train and a start moment of the adjacent transmit pulse train is 101 ns, a difference may be calculated as 46 ns. It can be learned that a difference between the two differences is 4 ns, which is less than 6 ns. Therefore, it is determined that the two differences do not exceed the preset first deviation threshold. Further, the control apparatus may further compare the time interval between each first-type pulse of the first echo signal and the start moment of the first echo signal with the time interval between each first-type pulse in the transmit pulse train corresponding to the first echo signal and the start moment of the transmit pulse train (or compare the time interval between each first-type pulse in the adjacent echo signal corresponding to the first echo signal and the start moment of the adjacent echo signal with the time interval between each first-type pulse in the adjacent pulse train of the transmit pulse train corresponding to the first echo signal and the start moment of the adjacent pulse train), that is, compare the time interval 50 ns between the first-type pulse of the first echo signal and the start moment of the first echo signal with the time interval 55 ns between the first-type pulse of the transmit pulse train corresponding to the first echo signal and the start moment of the transmit pulse train. It can be learned that a difference between the two time intervals is 5 ns, which is less than 6 ns. Therefore, it is determined that the two time intervals do not exceed the preset second deviation threshold. Therefore, the control apparatus may modify the label of the first echo signal to "valid signal".

It should be noted that, in the foregoing design, labeling the valid signal is merely an example of an identification manner. This application does not limit any implementation of identifying the valid signal, provided that the LiDAR can identify a sub-echo signal that is determined, through matching, as a valid signal.

### Point cloud confirmation

After all sub-echo signals labeled as "potential interference signal" are compared and analyzed based on the time intervals between the pulse trains, if labels of all the sub-echo signals are not modified, it indicates that there is no valid signal in the first echo signal, and the first echo signal cannot match the first pulse train. Therefore, it indicates that an anti-interference effect of the first pulse train is poor, and consequently, the echo signal corresponding to the first pulse train is theoretically covered by an interference signal. In this case, the point cloud corresponding to the first echo signal is displayed as an abnormal state. If a label of only one sub-echo signal is modified to "valid signal", it indicates that there is a single valid signal in the first echo signal, and further indicates that the first echo signal can exactly match the first pulse train. In this case, the point cloud corresponding to the first echo signal is displayed as a normal state. If labels of at least two sub-echo signals are modified to "valid signal", an interference signal may also be matched as a valid signal due to an error in the foregoing matching process. Theoretically, the matching result is incorrect. Because the point cloud displays the at least two sub-echo signals labeled as "valid signal", the point cloud corresponding to the first echo signal is also displayed as an abnormal state.

Step 804: The control apparatus controls the transmit module to continue to transmit the first pulse train, and then performs step 802.

In step 804, when the point cloud corresponding to the first echo signal is normal, for example, when there is a single valid signal in the first echo signal, it indicates that the time interval of the first pulse train is set properly, and basically no echo signal interference is caused. In this case, the control apparatus may subsequently continue to transmit the first pulse train, and receive an echo signal again after transmitting the first pulse train. If a point cloud of the echo signal continues to be normal, the control apparatus may continue to transmit the first pulse train.

Step 805: The control apparatus controls the transmit module to transmit a third pulse train, where the third pulse train is different from the first pulse train; and then performs step 802.

In step 805, when the point cloud corresponding to the first echo signal is abnormal, for example, when the first echo signal does not have a valid signal or the first echo signal has a plurality of valid signals, it indicates that the time interval of the first pulse train is not properly set, and even severe echo signal interference is generated. In this case, the control apparatus may subsequently transmit the third pulse train different from the first pulse train, and receive an echo signal after transmitting the third pulse train, and if a point cloud of the echo signal is still abnormal, the control apparatus may continue to adjust the transmit pulse train until an echo signal with a normal point cloud is received. In this way, the transmit pulse train is adjusted, to help find a transmit pulse train that can generate a normal point cloud, and improve detection accuracy.

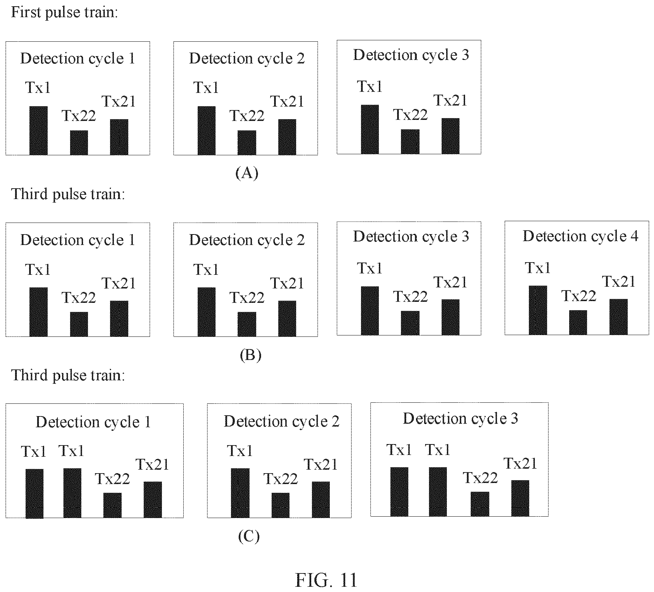

In a possible implementation, when there is no valid signal in the first echo signal, to improve anti-interference performance in the transmit pulse train, the control apparatus may correspondingly increase a quantity of time intervals between pulses included in the pulse train by increasing a quantity of first-type pulses included in the transmit pulse train. Because a time interval between pulses is related to a random number generated during coding, it is equivalent to increasing a quantity of time intervals that are included in the pulse train and that are obtained by using a random number, it is helpful to improve anti-interference performance in the transmit pulse train. For example, when the first pulse train includes M₁ first-type pulses and M₂ first-type pulses, the third pulse train that is transmitted under control by the control apparatus may include M₅ first-type pulses and M₂ first-type pulses, and a value of M₅ is greater than a value of M₁. The third pulse train may be generated by increasing a quantity of detection cycles and/or increasing a quantity of first-type pulses in one or more detection cycles on the basis of the first pulse train, the newly added detection cycle may be kept consistent with the detection cycle in the first pulse train, and an interval between the newly added first-type pulse and another pulse may be constrained by specified disturbance. For example, FIG. 11 shows an example of a schematic diagram of an implementation of adding a first-type pulse according to an embodiment of this application. (A) in FIG. 11 shows a first pulse train. It can be seen that the first pulse train includes three detection cycles, and each detection cycle includes one first-type pulse and two second-type pulses. (B) in FIG. 11 shows a third pulse train generated by increasing a quantity of detection cycles. It can be seen that, the third pulse train includes four detection cycles, and each detection cycle includes one first-type pulse and two second-type pulses. (C) in FIG. 11 shows a third pulse train generated by increasing a quantity of first-type pulses included in one or more detection cycles. It can be seen that the third pulse train still includes three detection cycles, but the first detection cycle and the third detection cycle each include two first-type pulses and two second-type pulses, and the second detection cycle still includes one first-type pulse.

In a possible implementation, when there are a plurality of valid signals in the first echo signal, the control apparatus may refresh a time interval between a first-type pulse in any detection cycle corresponding to the first pulse train and a start moment of the detection cycle, for example, refresh a time interval between a first-type pulse in any detection cycle of the first pulse train and an adjacent pulse train of the first pulse train and a start moment of the detection cycle, to generate the third pulse train and an adjacent pulse train of the third pulse train. Further, for example, three random numbers may be re-determined in a coding manner, one of the random numbers is assigned to a time interval (corresponding to Δt₅₂ shown in FIG. 10 when the previous echo signal and the previous pulse train have a same time interval) between a first-type pulse in any detection cycle of the previous pulse train and a start moment of the detection cycle, to obtain the previous pulse train of the third pulse train; another random number is assigned to a time interval (corresponding to Δt₅₁ shown in FIG. 10 when the first echo signal and the first pulse train have a same time interval) between a first-type pulse in any detection cycle of the first pulse train and a start moment of the detection cycle, to obtain the third pulse train; and the last random number is assigned to a time interval (corresponding to Δt₅₃ shown in FIG. 10 when the next echo signal and the next pulse train have a same time interval) between a first-type pulse in any detection cycle of the next pulse train and a start moment of the detection cycle, to obtain the next pulse train of the third pulse train. In this way, the control apparatus may subsequently continue to perform detection by using the third pulse train and adjacent pulse trains of the third pulse train whose time intervals are refreshed, until a target pulse train whose echo signal can perfectly match the transmit pulse train is found.

It should be noted that, when one detection cycle includes a plurality of first-type pulses, the control apparatus may refresh a time interval between any one or more first-type pulses in the detection cycle and a start moment of the detection cycle. For example, the control apparatus may refresh only a time interval between a first-type pulse (for example, the 1^{st} first-type pulse) in the detection cycle and the start moment of the detection cycle. In this way, the time interval between the first-type pulse in the detection cycle and the start moment of the detection cycle changes, but a time interval between any two other pulses remains unchanged, so that a time interval between each first-type pulse in the detection cycle and the start moment of the detection cycle changes. In addition, a time interval in a detection cycle includes a time interval between a first-type pulse in the detection cycle and a start moment of the detection cycle, a time interval between the first-type pulse in the detection cycle and an adjacent second-type pulse in the detection cycle, and a time interval between the second-type pulse in the detection cycle and the start moment of the detection cycle. After the time interval between the first-type pulse in the detection cycle and the start moment of the detection cycle is refreshed, the time interval between the first-type pulse in the detection cycle and the start moment of the detection cycle changes, but the time interval between the second-type pulse in the detection cycle and the start moment of the detection cycle remains unchanged. Therefore, the time interval between the first-type pulse in the detection cycle and the adjacent second-type pulse also changes. That is, when there are a plurality of valid signals in the first echo signal, a time interval between a first-type pulse transmitted in each detection cycle in the third pulse train and a start moment of each detection cycle may be different from a time interval between a first-type pulse transmitted in each detection cycle in the first pulse train and a start moment of each detection cycle; and/or a time interval between a first-type pulse and an adjacent second-type pulse that are transmitted in each detection cycle in the third pulse train is different from a time interval between a first-type pulse and an adjacent second-type pulse that are transmitted in each detection cycle in the first pulse train.

In the foregoing Embodiment 2, when the point cloud of the first echo signal corresponding to the first pulse train is abnormal, the subsequently transmitted pulse train is adjusted, so that the subsequently transmitted pulse train can generate a normal point cloud, thereby improving detection accuracy. In addition, by performing intra-train time interval comparison and inter-train time interval comparison on an echo signal, intra-train anti-interference performance and inter-train anti-interference performance of a transmit pulse train can be accurately determined, so that a subsequently transmitted pulse train can be adjusted with reference to the intra-train anti-interference performance and the inter-train anti-interference performance, so that the subsequently transmitted pulse train can achieve a better intra-train anti-interference effect and a better inter-train anti-interference effect, thereby effectively improving detection accuracy, and improving quality of a subsequently constructed point cloud.

It should be understood that the control method provided in this application may be further extended to any information system that needs to accurately detect an object. It should be understood that all technical solutions for implementing accurate detection by using the control solution provided in this application fall within the protection scope of this application, and are not listed one by one in this application.

According to the control solution provided in the embodiments of this application, this application further provides a control apparatus, including at least one processor and an interface circuit. The interface circuit is configured to provide data or a code instruction for the at least one processor, and the at least one processor is configured to implement, by using a logic circuit or executing the code instruction, the method performed by the foregoing control apparatus.

According to the control solution provided in the embodiments of this application, this application further provides a LiDAR, including a control apparatus and a transmit module. The control apparatus is configured to perform the control method performed by the foregoing control apparatus, and the transmit module is configured to send a pulse train under control of the control apparatus.

In a possible design, the LiDAR further includes a scanning mechanism, and the scanning mechanism includes one or more of a multi-sided rotating mirror, a pendulum mirror, an MEMS scanning mirror, or a prism.

In a possible design, the LiDAR further includes a receive module, the receive module is configured to receive an echo signal, and the control apparatus is further configured to determine a target feature based on the echo signal.

According to the control solution provided in the embodiments of this application, this application further provides a terminal device, including the LiDAR described in the foregoing content. Examples of the terminal device include but are not limited to: a smart home device (such as a television, a floor sweeping robot, a smart desk lamp, an acoustic system, an intelligent lighting system, an electrical control system, home background music, a home theater system, an intercom system, and a video surveillance system), an intelligent transportation device (such as a car, a ship, an uncrewed aerial vehicle, a train, a freight car, and a truck), an intelligent manufacturing device (such as a robot, an industrial device, intelligent logistics, and a smart factory), and an intelligent terminal (a mobile phone, a computer, a tablet computer, a palmtop computer, a desktop computer, a headset, an acoustic device, a wearable device, a vehicle-mounted device, a virtual reality device, an augmented reality device, and the like).

According to the control solution provided in the embodiment of this application, this application further provides a computer-readable storage medium. The computer-readable storage medium stores a computer program. When the computer program is run, the method performed by the control apparatus in the foregoing content is performed.

According to the control solution provided in the embodiments of this application, this application further provides a computer program product. When the computer program product runs on a processor, the method performed by the control apparatus in the foregoing content is implemented.

Terms such as "component", "module", and "system" used in this specification are used to indicate a computer-related entity, hardware, firmware, a combination of hardware and software, software, or software being executed. For example, a component may be, but is not limited to, a process that is run on a processor, a processor, an object, an executable file, a thread of execution, a program, and/or a computer. As illustrated by using figures, both a computing device and an application that is run on the computing device may be components. One or more components may reside within a process and/or a thread of execution, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system, in a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
controlling a transmit module to transmit a first pulse train, wherein the first pulse train comprises M₁ first-type pulses and M₂ second-type pulses, M₁ is an integer greater than 1, and M₂ is a positive integer; and
controlling the transmit module to transmit a second pulse train, wherein the second pulse train comprises M₃ first-type pulses and/or M₄ second-type pulses, and M₃ and M₄ are positive integers, wherein
a power of the first-type pulse is greater than a power of the second-type pulse; and the second pulse train and the first pulse train have different transmission time periods, or correspond to different transmit submodules, or correspond to different pixels in a detection field of view, or correspond to different detection fields of view, or correspond to different receive submodules.

2. The control method according to claim 1, wherein
the method further comprises:
generating a point cloud based on at least the first pulse train and the second pulse train, wherein
the first pulse train and the second pulse train correspond to different point clouds.

3. The control method according to claim 1 or 2, wherein the first pulse train belongs to a first pulse train set and a second pulse train set, each pulse train in the first pulse train set comprises the first-type pulse, and each pulse train in the second pulse train set comprises the second-type pulse, wherein
a time interval between first-type pulses corresponding to any two pulse trains in the first pulse train set is determined based on a far-field angular resolution; and
a time interval between second-type pulses corresponding to any two pulse trains in the second pulse train set is determined based on a near-field angular resolution.

4. The control method according to any one of claims 1 to 3, wherein the first pulse train belongs to a third pulse train set, and each pulse train in the third pulse train set comprises the first-type pulse and the second-type pulse; and
when a ratio of the far-field angular resolution to the near-field angular resolution is an integer, a time interval offset of first-type pulses and second-type pulses corresponding to any two pulse trains in the third pulse train set is the same; or
when a ratio of the far-field angular resolution to the near-field angular resolution is not an integer, time interval offsets of first-type pulses and second-type pulses corresponding to at least two pulse trains in the third pulse train set are different.

5. The control method according to any one of claims 1 to 4, wherein for the first pulse train, the M₁ first-type pulses comprise M₁ first pulses with a same power, the M₂ second-type pulses comprise K types of second pulses, powers of the K types of second pulses are different, a sum of quantities of the K types of second pulses is M₂, and K is a positive integer.

6. The control method according to claim 5, wherein the M₁ first-type pulses and the M₂ second-type pulses are transmitted in a plurality of detection cycles, and a pulse train transmitted in each detection cycle comprises the first pulse and/or one or more of the K types of second pulses.

7. The control method according to claim 6, wherein pulse trains transmitted in any two detection cycles are the same.

8. The control method according to claim 6 or 7, wherein when a pulse train transmitted in any detection cycle comprises the first pulse and one or more of the K types of second pulses, a time interval between the first pulse and an adjacent second pulse is not less than a time interval corresponding to a detection blind area of the first pulse.

9. The control method according to any one of claims 1 to 8, wherein the control method further comprises:
controlling a receive module to receive a first echo signal; and
controlling the transmit module to transmit a third pulse train, wherein the third pulse train is different from the first pulse train.

10. The control method according to claim 9, wherein the third pulse train comprises M₅ first-type pulses, and a value of M₅ is greater than a value of M₁.

11. The control method according to claim 9 or 10, wherein a time interval between a first-type pulse transmitted in each detection cycle in the third pulse train and a start moment of the detection cycle is different from a time interval between a first-type pulse transmitted in each detection cycle in the first pulse train and a start moment of the detection cycle; and/or
a time sequence interval between a first-type pulse and an adjacent second-type pulse that are transmitted in each detection cycle in the third pulse train is different from a time sequence interval between a first-type pulse and an adjacent second-type pulse that are transmitted in each detection cycle in the first pulse train.

12. The control method according to any one of claims 9 to 11, wherein before the controlling the transmit module to transmit a third pulse train, the method further comprises:
determining that the first echo signal does not comprise a valid signal or comprises a plurality of valid signals.

13. The control method according to any one of claims 9 to 12, wherein a time interval between a first-type pulse of the first pulse train and a start moment of the first pulse train is obtained through coding.

14. A control method, comprising:
controlling a transmit module to transmit a fourth pulse train;
controlling the transmit module to transmit a fifth pulse train; and
controlling the transmit module to transmit a sixth pulse train, wherein
the pulse trains meet one of the following:
the fourth pulse train comprises M₁ first-type pulses, the fifth pulse train comprises M₂ second-type pulses, and the sixth pulse train comprises M₁ first-type pulses; or
the fourth pulse train comprises M₂ second-type pulses, the fifth pulse train comprises M₁ first-type pulses, and the sixth pulse train comprises M₂ second-type pulses; and
a power of the M₁ first-type pulses is greater than a power of the M₂ second-type pulses, M₁ is an integer greater than 1, and M₂ is a positive integer.

15. A control apparatus, comprising at least one processor and an interface circuit, wherein the interface circuit is configured to provide data or code instructions for the at least one processor, and the at least one processor is configured to implement the method according to any one of claims 1 to 14 by using a logic circuit or executing the code instructions.

16. A LiDAR, comprising a control apparatus and a transmit module, wherein the control apparatus is configured to perform the control method according to any one of claims 1 to 14, and the transmit module is configured to transmit a pulse train under control of the control apparatus.

17. The LiDAR according to claim 16, wherein the LiDAR further comprises a scanning mechanism, and the scanning mechanism comprises one or more of a multi-sided rotating mirror, a pendulum mirror, a micro-electro-mechanical system (micro-electro-mechanical system, MEMS) scanning mirror, or a prism.

18. The LiDAR according to claim 16 or 17, wherein the LiDAR further comprises a receive module, the receive module is configured to receive an echo signal, and the control apparatus is further configured to determine a target feature based on the echo signal.

19. A terminal device, comprising the LiDAR according to any one of claims 16 to 18.

20. A computer-readable storage medium, wherein the computer-readable storage medium stores a computer program, and when the computer program is run, the method according to any one of claims 1 to 14 is performed.

21. A computer program product, wherein when the computer program product is run on a processor, the method according to any one of claims 1 to 14 is implemented.
